# EUROPEAN PATENT APPLICATION

(11) **EP 4 704 007 A1**
(43) Date of publication of application: **04.03.2026**
(21) Application number: 25196613.1
(22) Date of filing: 19.08.2025
(51) Int. Cl.: G06Q 20/12, G06Q 20/24, G06Q 20/38, G06Q 20/40

(54) **CREDIT VOUCHER-BASED PAYMENT METHOD AND APPARATUS**

(30) Priority: 03.09.2024 CN 202411231682
(71) Applicant: Alipay (Hangzhou) Information Technology Co., Ltd., Hangzhou, Zhejiang 310000 (CN)
(72) Inventor: QIU, Jieqiong, Hangzhou, 310000 (CN); WANG, Zizheng, Hangzhou, 310000 (CN); SHI, Chunyan, Hangzhou, 310000 (CN); YUAN, Qi, Hangzhou, 310000 (CN)
(74) Representative: Goddar, Heinz J.

(57) **Abstract**

Implementations of the present specification provide a credit voucher-based payment method and apparatus. A credit voucher-based payment method includes: In an order payment process, on the basis that a first payment channel list that is generated for order information, that includes an application identifier of a credit voucher application, and that is delivered by a server is received and displayed, a jump to a credit voucher subprogram is made based on a payment request associated with the application identifier, to perform the credit voucher application and a credit voucher activation in the credit voucher subprogram, and perform payment channel binding on an activated credit voucher by using the server; and order payment is performed based on the credit voucher, based on a second payment channel list that includes the credit voucher and that is delivered by the server, and by submitting a payment instruction with the credit voucher to the server. As such, the credit voucher application and the credit voucher activation in the order payment process are implemented.

## Description

### TECHNICAL FIELD

The present document relates to the field of data processing technologies, and in particular, to a credit voucher-based payment method and apparatus.

### BACKGROUND

With development of Internet technologies, more services are provided online, and more users participate in various services online, for example, payment services. Both offline consumption and online consumption can be paid online. In a payment process, a checkout counter displays a plurality of bank cards by default, and a user can select any one of the plurality of bank cards to pay. In such a process, a payment channel displayed on the checkout counter affects payment decisions of the user to a certain extent. How to effectively recommend payment to the user on the checkout counter becomes a focus of attention of all parties.

### SUMMARY

One or more implementations of the present specification provide a credit voucher-based payment method, including: receiving and displaying a first payment channel list that is generated for order information and that is delivered by a server, the first payment channel list including an application identifier of a credit voucher application; jumping to a credit voucher subprogram based on a payment request associated with the application identifier, to perform the credit voucher application and a credit voucher activation in the credit voucher subprogram, and perform payment channel binding on an activated credit voucher by using the server; receiving and displaying a second payment channel list that includes the credit voucher and that is delivered by the server; and submitting an obtained payment instruction with the credit voucher to the server, to perform order payment based on the credit voucher.

One or more implementations of the present specification provide another credit voucher-based payment method, including: generating a first payment channel list based on order information of a payment user, and delivering the first payment channel list to a user terminal, the first payment channel list including an application identifier of a credit voucher application; performing payment channel binding on an activated credit voucher based on a voucher binding request received after a credit voucher application and a credit voucher activation are performed in a credit voucher subprogram; delivering, to the user terminal, a second payment channel list that includes the credit voucher and that is obtained through the channel binding; and performing order payment based on the credit voucher and a payment instruction that has the credit voucher and that is submitted by the user terminal.

One or more implementations of the present specification provide a credit voucher-based payment apparatus, including: a first receiving module, configured to receive and display a first payment channel list that is generated for order information and that is delivered by a server, the first payment channel list including an application identifier of a credit voucher application; a jump module, configured to jump to a credit voucher subprogram based on a payment request associated with the application identifier, to perform the credit voucher application and a credit voucher activation in the credit voucher subprogram, and perform payment channel binding on an activated credit voucher by using the server; a second receiving module, configured to receive and display a second payment channel list that includes the credit voucher and that is delivered by the server; and an instruction submission module, configured to submit an obtained payment instruction with the credit voucher to the server, to perform order payment based on the credit voucher.

One or more implementations of the present specification provide another credit voucher-based payment apparatus, including: a first delivery module, configured to: generate a first payment channel list based on order information of a payment user, and deliver the first payment channel list to a user terminal, the first payment channel list including an application identifier of a credit voucher application; a binding module, configured to perform payment channel binding on an activated credit voucher based on a voucher binding request received after a credit voucher application and a credit voucher activation are performed in a credit voucher subprogram; a second delivery module, configured to deliver, to the user terminal, a second payment channel list that includes the credit voucher and that is obtained through the channel binding; and an order payment module, configured to perform order payment based on the credit voucher and a payment instruction that has the credit voucher and that is submitted by the user terminal.

One or more implementations of the present specification provide a credit voucher-based payment device, including: a processor, and a memory configured to store computer-executable instructions, where in response to that the computer-executable instructions are executed, the processor is enabled to perform the following operations: receiving and displaying a first payment channel list that is generated for order information and that is delivered by a server, the first payment channel list including an application identifier of a credit voucher application; jumping to a credit voucher subprogram based on a payment request associated with the application identifier, to perform the credit voucher application and a credit voucher activation in the credit voucher subprogram, and perform payment channel binding on an activated credit voucher by using the server; receiving and displaying a second payment channel list that includes the credit voucher and that is delivered by the server; and submitting an obtained payment instruction with the credit voucher to the server, to perform order payment based on the credit voucher.

One or more implementations of the present specification provide another credit voucher-based payment device, including: a processor, and a memory configured to store computer-executable instructions, where in response to that the computer-executable instructions are executed, the processor is enabled to perform the following operations: generating a first payment channel list based on order information of a payment user, and delivering the first payment channel list to a user terminal, the first payment channel list including an application identifier of a credit voucher application; performing payment channel binding on an activated credit voucher based on a voucher binding request received after a credit voucher application and a credit voucher activation are performed in a credit voucher subprogram; delivering, to the user terminal, a second payment channel list that includes the credit voucher and that is obtained through the channel binding; and performing order payment based on the credit voucher and a payment instruction that has the credit voucher and that is submitted by the user terminal.

One or more implementations of the present specification provide a computer-readable storage medium, configured to store computer-executable instructions. In response to that the computer-executable instructions are executed, the following procedure is implemented: receiving and displaying a first payment channel list that is generated for order information and that is delivered by a server, the first payment channel list including an application identifier of a credit voucher application; jumping to a credit voucher subprogram based on a payment request associated with the application identifier, to perform the credit voucher application and a credit voucher activation in the credit voucher subprogram, and perform payment channel binding on an activated credit voucher by using the server; receiving and displaying a second payment channel list that includes the credit voucher and that is delivered by the server; and submitting an obtained payment instruction with the credit voucher to the server, to perform order payment based on the credit voucher.

One or more implementations of the present specification provide another computer-readable storage medium, configured to store computer-executable instructions. In response to that the computer-executable instructions are executed, the following procedure is implemented: generating a first payment channel list based on order information of a payment user, and delivering the first payment channel list to a user terminal, the first payment channel list including an application identifier of a credit voucher application; performing payment channel binding on an activated credit voucher based on a voucher binding request received after a credit voucher application and a credit voucher activation are performed in a credit voucher subprogram; delivering, to the user terminal, a second payment channel list that includes the credit voucher and that is obtained through the channel binding; and performing order payment based on the credit voucher and a payment instruction that has the credit voucher and that is submitted by the user terminal.

### BRIEF DESCRIPTION OF DRAWINGS

To describe the technical solutions in one or more implementations of the present specification or in the existing technologies more clearly, the following is a brief introduction of the accompanying drawings for illustrating such technical solutions. Clearly, the accompanying drawings described below are merely some implementations of the present specification, and a person of ordinary skill in the art can derive other drawings from such accompanying drawings without making innovative efforts.
FIG. 1 is a schematic diagram illustrating an implementation environment of a credit voucher-based payment method according to one or more implementations of the present specification;
FIG. 2 is a flowchart illustrating processing of a credit voucher-based payment method according to one or more implementations of the present specification;
FIG. 3 is a schematic diagram illustrating a first payment interface according to one or more implementations of the present specification;
FIG. 4 is a schematic diagram illustrating an application interface according to one or more implementations of the present specification;
FIG. 5 is a schematic diagram illustrating an activation interface according to one or more implementations of the present specification;
FIG. 6 is a schematic diagram illustrating a second payment interface according to one or more implementations of the present specification;
FIG. 7 is a flowchart illustrating processing of a credit voucher-based payment method applied to an order payment scenario according to one or more implementations of the present specification;
FIG. 8 is a flowchart illustrating processing of another credit voucher-based payment method according to one or more implementations of the present specification;
FIG. 9 is a schematic diagram illustrating an implementation of a credit voucher-based payment apparatus according to one or more implementations of the present specification;
FIG. 10 is a schematic diagram illustrating another implementation of a credit voucher-based payment apparatus according to one or more implementations of the present specification;
FIG. 11 is a schematic structural diagram illustrating a credit voucher-based payment device according to one or more implementations of the present specification; and
FIG. 12 is a schematic structural diagram illustrating another credit voucher-based payment device according to one or more implementations of the present specification.

### DESCRIPTION OF EMBODIMENTS

To make a person skilled in the art better understand the technical solutions in one or more implementations of the present specification, the following clearly and comprehensively describes the technical solutions in the one or more implementations of the present specification with reference to the accompanying drawings in the one or more implementations of the present specification. Clearly, the described implementations are merely some rather than all of implementations of the present specification. All other implementations obtained by a person of ordinary skill in the art based on the one or more implementations of the present specification without making innovative efforts shall fall within the protection scope of the present document.

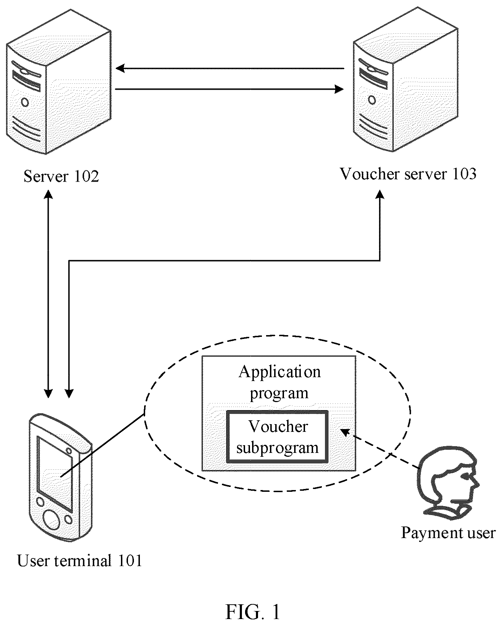

A credit voucher-based payment method provided in one or more implementations of the present specification can be applied to an implementation environment of credit voucher payment. As shown in FIG. 1, the implementation environment includes at least the following: a user terminal 101 that initiates order payment, a server 102 that performs order payment processing, and a voucher server 103 that performs credit voucher-related processing.

The user terminal 101 can be a mobile phone, a personal computer, a tablet computer, an e-book reader, a virtual reality (VR)-based information exchange device, a vehicle-mounted terminal, an IoT device, a wearable intelligent device, a laptop computer, a desktop computer, etc. An application program and a credit voucher subprogram run on the user terminal 101. The credit voucher subprogram can run in the application program. In an order payment process, the application program interacts with the credit voucher subprogram at a front end.

The server 102 can be a server, or a server cluster including several servers, or one or more cloud servers on a cloud computing platform, and is configured to: cooperate with the voucher server 103 to perform credit voucher processing, and perform credit voucher-based order payment.

The voucher server 103 is a server of a voucher institution that provides a credit voucher, and is configured to: perform a credit voucher application and a credit voucher activation related processing, and cooperate with the server 102 to perform payment channel binding on the credit voucher.

In an implementation environment, in an order payment process, the server 102 generates, for order information, a first payment channel list including an application identifier of a credit voucher application, and delivers the first payment channel list to the user terminal 101. The user terminal 101 receives and displays the first payment channel list including the application identifier of the credit voucher application, to recommend a payment user to perform the credit voucher application, perform a credit voucher activation, and perform order payment based on a credit voucher. In response to that the payment user chooses to apply for and use the credit voucher to perform order payment, a jump to the credit voucher subprogram is made based on a payment request associated with the application identifier, to perform the credit voucher application and a credit voucher activation in the credit voucher subprogram. For example, the credit voucher application and the credit voucher activation are completed through cooperation between the credit voucher subprogram and the credit voucher server 103. After activation succeeds, payment channel binding is performed on an activated credit voucher by using the server 102. A second payment channel list including the activated credit voucher is obtained, and the second payment channel list is delivered to the user terminal 101 for display, to recommend the payment user to perform order payment based on a credit voucher that is currently applied for. In response to that a payment instruction of the payment user for selecting, for order payment, the credit voucher that is currently applied for is obtained, the payment instruction is submitted to the server 102 to perform order payment based on the credit voucher. As such, the credit voucher application, the credit voucher activation, and order payment performed based on the credit voucher are recommended in the order payment process. In addition, the credit voucher application, the credit voucher activation, payment channel binding on the credit voucher, and order payment are further integrated. Therefore, an immediate application and immediate use of the credit voucher are implemented in the order payment process.

One or more implementations of a credit voucher-based payment method provided in the present specification are as follows:

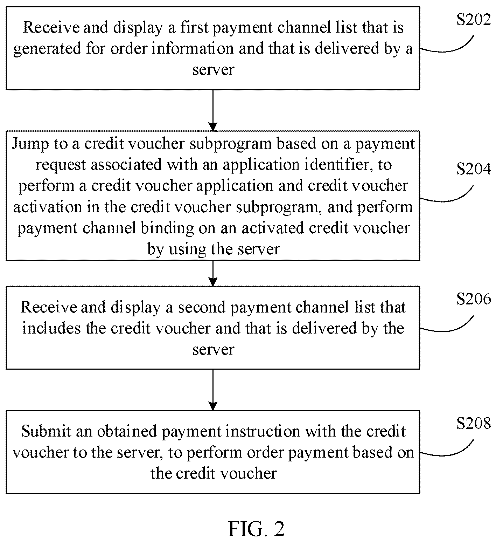

As shown in FIG. 2, an implementation provides a credit voucher-based payment method, and the method, for example, includes step S202 to step S208.

Step S202: Receive and display a first payment channel list that is generated for order information and that is delivered by a server.

In an implementation, in a process of paying an order of a payment user, the server generates the first payment channel list for the order information, and delivers the first payment channel list. Herein, the first payment channel list that is generated for the order information and that is delivered by the server is received, and the first payment channel list is displayed. For example, the first payment channel list can be displayed on a payment interface. For example, the first payment channel list is displayed on a payment interface of an application program.

In a process of generating the first payment channel list, to implement recommendation of a credit voucher application to the payment user in an order payment process, an application identifier of the credit voucher application can be configured in the first payment channel list. As such, the credit voucher application is recommended to the payment user in a process of displaying the first payment channel list to the payment user.

For example, the first payment channel list includes the application identifier of the credit voucher application. A credit voucher is a media-type voucher, such as an electronic credit card or an entity credit card, that records account related information of a holding user, that has a credit limit and can be used for payment based on the credit limit, and that provides a related service for the holding user. The credit voucher application is a process of applying for the credit voucher from a voucher institution that provides the credit voucher. The application identifier can be voucher related information of one or more of the credit voucher or recommendation information of the credit voucher application recommended to the payment user.

For example, the application identifier includes one or more of identification information of the credit voucher, voucher benefit information, or voucher limit information. The identification information of the credit voucher can be name information or recommendation information of the credit voucher. The voucher benefit information is benefit information that can be obtained after the credit voucher application is performed. For example, the voucher benefit information can be "50 yuan off". For example, the voucher benefit can be that 50 yuan is off in response to that order payment is performed after the payment user performs the credit voucher application. The voucher limit information is a voucher limit of the credit voucher obtained after the credit voucher application is performed. The voucher limit is a limit of credit payment that can be performed by the payment user based on the credit voucher.

In an example implementation, the credit voucher application is recommended to the payment user in the order payment process. For example, the credit voucher application is recommended by adding the application identifier of the credit voucher application to the first payment channel list. In view of this, whether to recommend the credit voucher application to a payment user who currently performs order payment needs to be detected before the first payment channel list is generated. For example, a predetermined user group to which the credit voucher application is recommended is predetermined. In response to that the payment user who currently performs order payment exists in the predetermined user group, the credit voucher application is recommended to the payment user. In other words, the first payment channel list including the application identifier of the credit voucher application is returned. In an optional implementation provided in an implementation, payment user detection is performed in the following manner: detecting whether a payment user corresponding to the order information exists in the predetermined user group.

In response to that the payment user corresponding to the order information exists in the predetermined user group, it indicates that the payment user who currently performs order payment exists in the predetermined user group. In other words, the payment user who currently performs order payment is a predetermined payment user to which the credit voucher application is recommended. A process of receiving and displaying the first payment channel list that is generated for the order information and that is delivered by the server is performed.

In response to that the payment user corresponding to the order information does not exist in the predetermined user group, it indicates that the payment user who currently performs order payment does not exist in the predetermined user group. In other words, the payment user who currently performs order payment is not a predetermined payment user to which the credit voucher application is recommended. In this case, the server can generate a payment channel list (the payment channel list does not include the application identifier of the credit voucher application) for the order information. Herein, the payment channel list generated for the order information is received and displayed, to select a target payment channel from the payment channel list for order payment. It should be noted that the above payment user detection process can be implemented on a user terminal, or can be implemented on the server.

To implement integration of the order payment, the credit voucher application, the credit voucher activation, and the payment channel binding performed on the credit voucher, the application identifier of the credit voucher application is configured in the first payment channel list in the order payment process, and the credit voucher application can be recommended to a part of payment users who has applied for the credit voucher application from the voucher institution and has obtained the credit voucher. In other words, an application for the credit voucher from the voucher institution again (the second time) is recommended to the part of payment users. For example, the predetermined user group includes a voucher user who has applied for obtaining the credit voucher from a voucher institution to which the credit voucher subprogram belongs. Herein, the voucher user is a user who has performed the credit voucher at the voucher institution and has obtained the credit voucher before currently performing order payment.

In an implementation, to improve validity of recommending the credit voucher application to the payment user in the order payment process, and further improve conversion of actually performing the credit voucher application by the payment user who performs order payment, more comprehensive and effective recommendation information can be configured in the application identifier included in the first payment channel list. For example, one or more of the voucher benefit information or the voucher limit information is configured in the application identifier, so that the payment user who performs order payment can be more clearly aware of one or more of a benefit or a limit of a currently recommended credit voucher.

For example, in an optional implementation, the determining the application identifier includes: determining a user recommendation preference based on second user behavior data of an application program; in response to that the user recommendation preference is a first recommendation preference, adding, to the application identifier, voucher benefit information of performing the credit voucher application, where the voucher benefit information is determined by entering the second user behavior data into a benefit pricing algorithm to perform benefit pricing calculation; and in response to that the user recommendation preference is a second recommendation preference, adding, to the application identifier, voucher limit information of performing the credit voucher application.

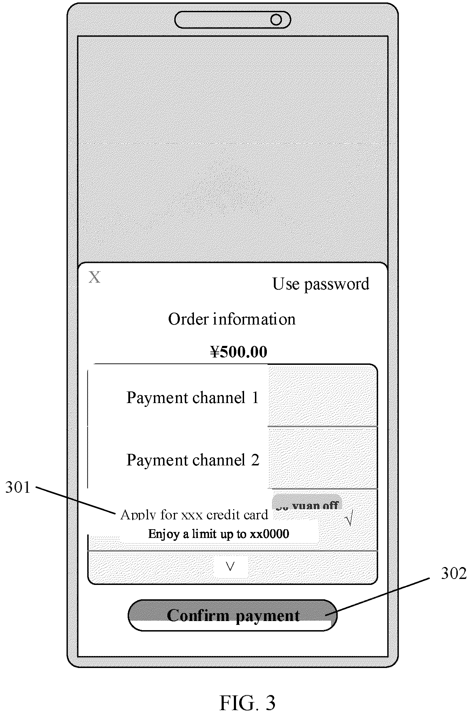

In addition, after the user recommendation preference is determined based on the second user behavior data of the application program, in response to that the determined user recommendation preference is a third user preference, the voucher benefit information of performing the credit voucher application can be further added to the application identifier, and the voucher limit information of performing the credit voucher application is added to the application identifier. For example, an application identifier 301 that is of the credit voucher application and that is included in a first payment channel list displayed on a first payment interface shown in FIG. 3 includes three parts: recommendation information of the credit voucher: "Apply for a xxx credit card", voucher benefit information: "50 yuan off", and voucher limit information: "Enjoy a limit up to xx0000".

Herein, the second user behavior data of the application program is data that is accumulated by the payment user in a use process of the application program and that is related to a recommendation preference of the payment user, for example, one or more of recommendation information in a historical payment process of the payment user, or a trigger action record or an access record of the payment user for the recommendation information in the historical payment process. It should be noted that, in consideration that the second user behavior data belongs to user privacy to a certain extent, a payment application may obtain user data authorization before obtaining the second user behavior data of the application program. A data authorization manner can be that a data authorization reminder is sent to a user, and the user can obtain use authorization of the second user behavior data after confirming the data authorization reminder by using an instruction. In addition, data authorization can alternatively be performed in another manner. The use authorization of the second user behavior data is obtained after confirmation is performed based on the instruction of the user.

In example implementations, in a process in which the payment user selects a payment channel from the payment channel list for payment, payment selection preferences of different payment users may be different. In view of this, in a process of recommending the credit voucher application to the payment user based on the payment channel list, to improve conversion of participating in the credit voucher application by the payment user who performs order payment, different rankings can be set for the application identifier in first payment channel lists of different payment users. As such, payment efficiency of the payment user who performs order payment can be ensured while a conversion rate of participating in the credit voucher application by the payment user is improved.

For example, in an optional implementation, the method further includes: determining a ranking of the application identifier in the first payment channel list, the determining the ranking including: determining a user payment preference based on third user behavior data of an application program, and determining the ranking of the application identifier in the first payment channel list based on the user payment preference; In addition, the ranking of the application identifier in the first payment channel list can alternatively be determined based on a recommendation policy of the application program. The recommendation policy can be a policy of a recommendation activity or a marketing activity.

The ranking of the application identifier in the first payment channel list is a sorting location of the application identifier in the first payment channel list. For example, the application identifier that is of the credit voucher application and that is included in the first payment channel list displayed on the first payment interface shown in FIG. 3 is ranked the third in the first payment channel list.

The third user behavior data of the application program is data that is accumulated by the payment user in a use process of the application program and that is related to a payment preference of the payment user, for example, a payment channel selected by the payment user in a historical payment process, and a ranking of the payment channel. It should be noted that, in consideration that the third user behavior data belongs to user privacy to a certain extent, data authorization can be performed on the third user behavior data in a manner similar to that of the second user behavior data. In particular, the third user behavior data and the second user behavior data can alternatively be the same user behavior data. In this case, the third user behavior data and the second user behavior data can include the data that is accumulated by the payment user in the use process of the application program and that is related to one or more of the payment preference of the payment user or the data that is accumulated by the payment user in the use process of the application program and that is related to the recommendation preference of the payment user.

Step S204: Jump to a credit voucher subprogram based on a payment request associated with the application identifier, to perform the credit voucher application and a credit voucher activation in the credit voucher subprogram, and perform payment channel binding on an activated credit voucher by using the server.

After the first payment channel list that includes the application identifier of the credit voucher application and that is delivered by the server is received, and the first payment channel list is displayed, the payment user can select any payment channel other than the application identifier from the first payment channel list for order payment, or can select the application identifier from the first payment channel list for order payment. A difference lies in that in response to that the application identifier in the first payment channel list is triggered, the credit voucher application is first performed in the order payment process. In an implementation, on the basis that the payment user selects the application identifier in the first payment channel list, a jump to the credit voucher subprogram is made based on the payment request associated with the application identifier, to perform the credit voucher application and the credit voucher activation in the credit voucher subprogram, and perform payment channel binding on the activated credit voucher by using the server.

In an example implementation, in a process of jumping to the credit voucher subprogram based on the payment request associated with the application identifier, different application identifiers may correspond to different voucher institutions. Correspondingly, for jumping to the credit voucher subprogram, jumps to credit voucher subprograms in different voucher institutions may be made. In an optional implementation provided in an implementation, the jumping to a credit voucher subprogram based on a payment request associated with the application identifier includes: submitting, to the server, the payment request that includes the application identifier for the server to determine and return a subprogram link of a voucher institution corresponding to the application identifier; and jumping to the credit voucher subprogram based on the returned subprogram link. The credit voucher subprogram is a subprogram that provides the credit voucher application and that applies for a voucher activation related service. The subprogram can run on the application program, and has a capability of independently providing a self-closed-loop service.

In an example execution process, the first payment channel list can be displayed on a payment interface of the application program. On this basis, in a process of jumping to the credit voucher subprogram, in response to that the credit voucher subprogram runs in the application program, a jump from the payment interface to the credit voucher subprogram can be made; or in response to that the payment interface is provided by the application program, a jump from the application program to the credit voucher subprogram can be made.

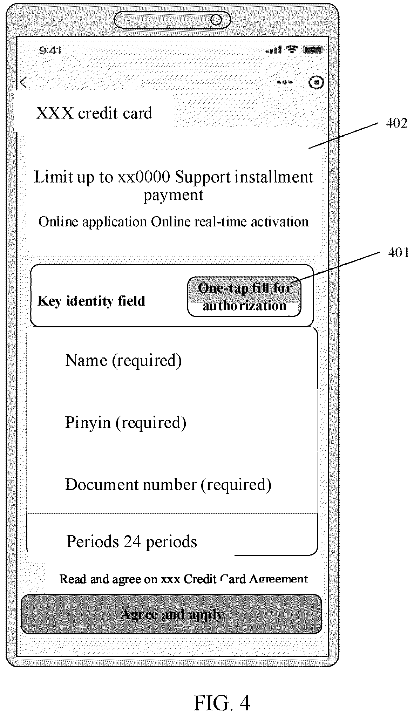

For example, after the payment user triggers the application identifier 301 in the first payment channel list displayed on the first payment interface of the application program in FIG. 3 to generate the payment request, a jump to an application interface, e.g., an application page, of the credit voucher subprogram in FIG. 4 is made.

Alternatively or additionally, the payment user can trigger the application identifier 301, and after the payment request is generated by tapping a "Confirm payment" control 302, a jump to the application interface of the credit voucher subprogram in FIG. 4 is made.

Alternatively or additionally, in the first payment channel list displayed on the first payment interface of the application program, the application identifier is ranked the third in the first payment channel list, and the application identifier can be configured to be in a state of being selected by default. In view of this, the payment user can tap the "Confirm payment" control to jump to the application interface of the credit voucher subprogram in FIG. 4, or can tap the application identifier to jump to the application interface of the credit voucher subprogram in FIG. 4.

Alternatively or additionally, in the first payment channel list displayed on the first payment interface of the application program, the application identifier is ranked the first in the first payment channel list, and the application identifier is in a state of being selected by default. In view of this, the payment user can tap the "Confirm payment" control to jump to the application interface of the credit voucher subprogram in FIG. 4, or can tap the application identifier to jump to the application interface of the credit voucher subprogram in FIG. 4.

In addition, the credit voucher subprogram can be further replaced with an institution page of a voucher institution in the application program. Correspondingly, the jump to the credit voucher subprogram based on the payment request associated with the application identifier can be replaced with a jump to an institution page of the voucher institution corresponding to the application identifier based on the payment request associated with the application identifier; and performing the credit voucher application and the credit voucher activation in the credit voucher subprogram can be replaced with performing the credit voucher application and the credit voucher activation on the institution page.

In an implementation, after the jump to the credit voucher subprogram is made, the credit voucher application and the credit voucher activation are performed in the credit voucher subprogram. The following separately provides specific descriptions of processes of performing the credit voucher application and the credit voucher activation in the credit voucher subprogram.

### (1) Credit voucher application

In an optional implementation, the performing the credit voucher application includes: obtaining, by the credit voucher subprogram, a key identity field entered through an application interface, and submitting the key identity field to a voucher server; and determining, by the voucher server, voucher application data based on the key identity field, performing voucher application review, and delivering a review result to the credit voucher subprogram.

The key identity field includes one or more of a name, Pinyin (Pinyin of the name), or a document number (document number of an identity related document). In a process in which the voucher server determines the voucher application data based on the key identity field and performs voucher application review, the voucher server can query a historical application record based on the key identity field, and perform voucher application review based on application data determined based on the historical application record, to obtain a review result. The review result is a review success result or a review failure result.

Further, to improve application efficiency of the credit voucher, reduce duration of order payment, improve order payment efficiency of the payment user, improve a success rate of the credit voucher application, and reduce an occurrence probability of a review failure or re-review due to a wrong key identity field entered by the payment user, for example, the application interface includes a field collection control unit; and after the field collection control unit is triggered, an identity acquisition interface is invoked to obtain the key identity field from an application program and write the key identity field into the application interface, and the credit voucher subprogram runs in the application program. For example, the application interface of the credit voucher subprogram in FIG. 4 includes a field collection control unit 401.

In addition, after the jump to the credit voucher subprogram is made, to further improve a willingness of the payment user to perform the credit voucher application, and further improve conversion of participating in the credit voucher application by the payment user who performs order payment, the credit voucher application can be further recommended to the payment user on an application interface of the credit voucher application. For example, the voucher server obtains voucher recommendation data of the application interface from the server by invoking a voucher recommendation interface.

For example, in an optional implementation provided, the determining the voucher recommendation data includes: determining a page material type based on first user behavior data of an application program, and determining a page material and a dynamic display parameter that are of the page material type; and using the page material and the dynamic display parameter as the voucher recommendation data.

The first user behavior data of the application program is payment related data accumulated by the payment user in the use process of the application program, for example, historical payment related data of the payment user, or access data of performing access and browsing in the application program. It should be noted that, in consideration that the first user behavior data belongs to user privacy to a certain extent, data authorization can be performed on the first user behavior data in a manner similar to that of the second user behavior data. In particular, the first user behavior data, the third user behavior data, and the second user behavior data can alternatively be the same user behavior data. In this case, the first user behavior data, the third user behavior data, and the second user behavior data can include one or more of the payment related data, the data that is accumulated by the payment user in the use process of the application program and that is related to the payment preference of the payment user, or the data that is accumulated by the payment user in the use process of the application program and that is related to the recommendation preference of the payment user.

The page material type is a material type of a page material that is displayed on the application interface and that is recommended to the payment user. The page material can be one or more of a text, an image, an animation, a voice, or a video. Correspondingly, the material type can be one or more of a text type, an image type, an animation type, a voice type, or a video type. The dynamic display parameter is a related parameter of displaying the page material on the application interface, for example, one or more of a location parameter, a location change parameter, or a time parameter corresponding to the location parameter of displaying the page material on the application interface, and one or more of a size parameter, a font parameter, or a color parameter of displaying the page material on the application interface, for example, voucher recommendation data 402 displayed on the application interface of the credit voucher subprogram in FIG. 4.

As described above, in an implementation, the order payment and the credit voucher application are integrated in the order payment process. On this basis, to improve payment experience of the payment user in a scenario in which the credit voucher application and the order payment are integrated, a payment waiting page can be displayed after a process of entering the key identity field on the application interface is completed and before the review result of the voucher application review in a credit voucher application process is obtained.

For example, the credit voucher subprogram displays a payment waiting page after submitting the key identity field to the voucher server, and closes the payment waiting page after receiving the review result;

In addition, the payment waiting page can be further displayed through cooperation between the credit voucher subprogram and the application program. For example, after submitting the key identity field to the voucher server, the credit voucher subprogram returns a payment waiting duration to the application program, and the application program displays the payment waiting page based on the payment waiting duration; or after submitting the key identity field to the voucher server, the credit voucher subprogram returns a payment waiting instruction to the application program, and the application program displays the payment waiting page based on the payment waiting instruction, and closes the payment waiting page after receiving a review success result returned by the credit voucher subprogram.

It should be noted that, after the payment user performs the credit voucher application, a voucher application review process performed by the voucher server is an online review process, and duration required for this review process can be controlled to fall within an example short time range (for example, a 10-second range). Therefore, in an implementation, the credit voucher application and the credit voucher activation introduced in the order payment process are continuous or relatively continuous processes. Therefore, the order payment process and the credit voucher application and the credit voucher activation processes can be considered as a continuous integrated processing process; or the credit voucher application process and the credit voucher activation process can be considered as two processing nodes in the order payment process, and the two processes can be specifically considered as pre-processing modes of performing order payment based on the credit voucher in the order payment process; or from a perspective of interaction of the payment user, the payment user performs the credit voucher application and the credit voucher activation in the order payment process, and can complete the credit voucher application in a short time (within the 10-second range), and the order payment is not interrupted due to a long time required for the credit voucher application.

### (2) Credit voucher activation

In an implementation, the credit voucher application and the credit voucher activation are introduced in the order process. In addition, in order that the credit voucher obtained through the credit voucher application and the credit voucher activation can be used for a current order payment, the obtained credit voucher is bound to the payment channel list of the payment user. As such, the payment user can select the credit voucher from the payment channel list in a current order payment process for order payment, to implement integration of the order payment, the credit voucher application, the credit voucher activation, and the credit voucher binding (the credit voucher is bound to the payment channel list).

For example, the credit voucher activation can be implemented in the following optional implementation: receiving and displaying, by the credit voucher subprogram, an activation interface, e.g., an activation page, that includes a review success result and that is delivered by a voucher server, and submitting, to the voucher server, identity verification information entered through the activation interface; and after the voucher server successfully performs identity verification based on the identity verification information, activating the credit voucher, and after the activating the credit voucher succeeds, sending a voucher binding request to the server through interface invoking for the server to bind the activated credit voucher to a payment channel list in response to the voucher binding request, to obtain the second payment channel list.

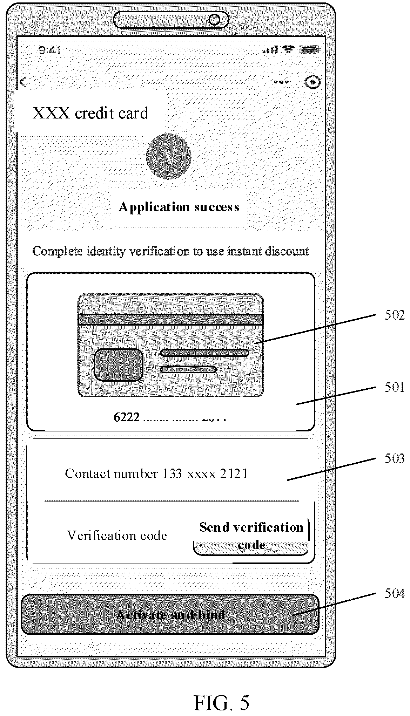

The activation interface can display voucher information of a credit voucher obtained after the payment user successfully performs the credit voucher application. For example, on an activation interface shown in FIG. 5, a mask voucher code 501 obtained after a voucher code of the credit voucher is masked is displayed; and a voucher image 502 of the credit voucher can be further displayed.

In addition, the activation interface can be further configured with a verification component for identity verification, for example, a verification component 503 on the activation interface shown in FIG. 5. The verification component 503 displays a contact number that is of the payment user and that is used to perform identity verification. A "Send verification code" control used to obtain the identity verification information is set. The payment user can obtain a verification code after tapping the "Send verification code" control, and can perform identity verification on the payment user after entering the obtained verification code in a "Verification code" input box of the verification component 503.

Further, an activation control can be further configured on the activation interface, for example, an "Activate and bind" control 504 configured on the activation interface shown in FIG. 5. A state of the activation control before identity verification succeeds is a non-triggerable state. After identity verification succeeds, the activation control configured on the activation interface is updated to a triggerable state. In this case, the payment user can initiate the credit voucher activation and the credit voucher binding by triggering the activation control.

Then, in response to that the payment user initiates the credit voucher activation by triggering the activation control, to enhance awareness of the payment user for the credit voucher activation process and the credit voucher binding process, an activation complete reminder can be displayed on the activation interface after the credit voucher activation is completed, or a binding complete reminder can be displayed on the activation interface after the credit voucher binding is completed, or an activation complete reminder and a binding complete reminder can be displayed on the activation interface after both the voucher activation and the credit voucher binding are completed.

In addition, in an implementation, on the basis of implementing integration of the order payment, the credit voucher application, the credit voucher activation, and the credit voucher binding, to improve efficiency of the credit voucher activation and reduce duration required for the order payment, the performing the credit voucher activation can further include: The credit voucher subprogram receives and displays the activation interface that includes the review success result and that is delivered by the voucher server, and submits an activation instruction to the voucher server. The voucher server activates the credit voucher based on the activation instruction, and sends the voucher binding request to the server through interface invoking after activation succeeds. The server binds the activated credit voucher to the payment channel list in response to the voucher binding request, to obtain the second payment channel list.

In some implementations, after the credit voucher application is performed in the order payment process, some payment users may temporarily have no willingness to activate the credit voucher or the payment user wants to delay activating the credit voucher. In view of this, a payment control unit for returning to the payment channel list can be set on the activation interface, to ensure that the order payment is smoothly performed, ensure an order payment success rate, and provide the payment user with a more flexible choice of the credit voucher application and the credit voucher activation introduced in the order payment process. On this basis, the payment user can trigger the payment control unit to continue an order payment procedure.

For example, the activation interface includes a payment control function or payment control unit, and in response to that the payment control function or payment control unit is triggered, an application program is returned from the credit voucher subprogram, and order payment is performed based on a target payment channel selected from a payment channel list displayed by the application program.

It should be noted that the payment channel list, the first payment channel list, and the second payment channel list are all payment channel lists of the payment user, and a difference lies in that the payment channel list includes payment channels of the payment user in the application program; the first payment channel list is obtained by adding the application identifier of the credit voucher application based on the payment channel list, that is, the first payment channel list includes the application identifier and the payment channel of the payment user in the application program; the second payment channel list is obtained by adding the credit voucher based on the payment channel list (the credit voucher is added to the payment channel list as a payment channel after the credit voucher is bound), that is, the second payment channel list includes the credit voucher and the payment channel of the payment user in the application program.

Step S206: Receive and display a second payment channel list that includes the credit voucher and that is delivered by the server.

In the order payment process, the jump to the credit voucher subprogram is made, to perform the credit voucher application and the credit voucher activation in the credit voucher subprogram; and after payment channel binding is performed on the activated credit voucher by using the server, return from the credit voucher subprogram to a payment interface of the order payment can be performed, the second payment channel list obtained by the server after the payment channel binding is performed on the credit voucher is received, and the second payment channel list can be displayed on the payment interface.

For example, the server returns a binding success prompt to the voucher server after performing payment channel binding, and the voucher server delivers a return instruction to the credit voucher subprogram based on the binding success prompt; and the credit voucher subprogram jumps to a payment interface of the second payment channel list based on the delivered return instruction.

In an example implementation, in response to that the delivered second payment channel list that includes the credit voucher is obtained in the order payment process, the payment user can select any payment channel in the second payment channel list to perform order payment. In response to that any payment channel other than the credit voucher in the second payment channel list is selected, a payment instruction with the selected any payment channel is submitted to the server, to perform order payment through the selected any payment channel.

In addition, the payment user can further select the credit voucher in the second payment channel list to perform order payment. In response to that the payment user selects the credit voucher to perform order payment, to enable the payment user to be more clearly aware of a benefit of performing order payment based on the credit voucher, in an optional implementation provided in an implementation, in response to that it is detected that the credit voucher in the second payment channel list is selected, one or more of credit voucher benefit information or voucher limit information of the credit voucher is obtained from the server and displayed.

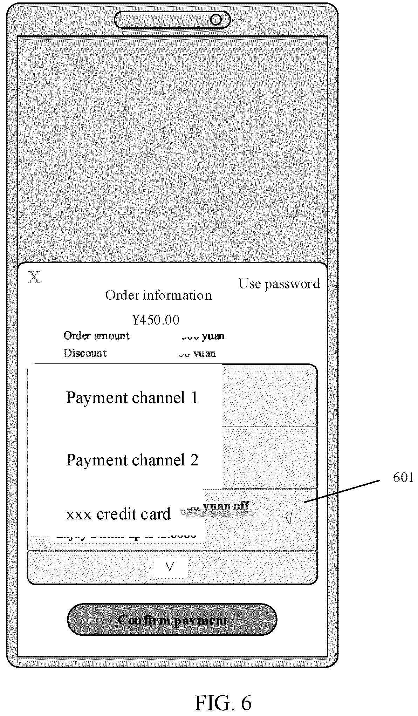

For example, a credit voucher 601 is displayed in a second payment interface that displays the second payment channel list in FIG. 6. In response to that the payment user selects the credit voucher as a payment channel, the voucher benefit information "50 yuan off" and the voucher limit information "Enjoy a limit up to xx0000" are displayed in an area corresponding to the credit voucher in the second payment channel list.

In addition, in response to that the credit voucher in the second payment channel list is not selected, one or more of the voucher benefit information or the voucher limit information of the credit voucher can be obtained from the server and displayed. Alternatively, to increase the possibility that the payment user selects the credit voucher in the second payment channel list to perform order payment, the credit voucher can be configured to be in a state of being selected by default, and the payment user can perform order payment based on the credit voucher only by confirming payment, without a need to manually select the credit voucher in the second payment channel list. A ranking of the credit voucher in the second payment channel list can be consistent with the ranking of the application identifier in the first payment channel list. In such a setting manner, a selection habit of the payment user can be continued, and the ranking of the credit voucher in the second payment channel list can be set to the first, to increase a probability that the payment user selects the credit voucher to perform order payment.

It should be noted that, in the provided implementation of displaying the credit voucher on the second payment channel page or the payment interface, features of any method can be combined according to a requirement of an actual scenario to form a new implementation. This is not limited in an implementation.

Step S208: Submit an obtained payment instruction with the credit voucher to the server, to perform order payment based on the credit voucher.

In an example implementation, in response to that the second payment channel list that includes the credit voucher is displayed, the payment user can select any payment channel in the second payment channel list to perform order payment, or can select the credit voucher in the second payment channel list to perform payment. In an implementation, in response to that the payment user selects the credit voucher in the second payment channel list to perform payment, the payment instruction with the credit voucher is obtained and submitted to the server, so that the server performs order payment based on the payment instruction and the credit voucher.

In addition, in a process of performing order payment based on the credit voucher, installment payment or split payment of the order payment can be further performed based on the credit voucher. For example, in a scenario in which the order payment, the credit voucher application, and the credit voucher activation are integrated in an implementation, a pay period quantity can be configured or selected in the credit voucher application. For example, a recommended pay period quantity of the credit voucher is displayed on the application interface, or a pay period quantity selection control is configured on the application interface, and all candidate pay period quantities of the credit voucher are displayed after the pay period quantity selection control is triggered. For example, a recommended pay period quantity of the credit voucher displayed on the application interface in FIG. 4 is 24 periods. In other words, an order of the payment user paid in 24 periods in the order payment process.

On this basis, in an optional implementation, the performing order payment based on the credit voucher includes: obtaining a pay period quantity submitted on the application interface, and creating an installment payment order of the order information based on the pay period quantity.

The pay period quantity is selected and determined from all candidate pay period quantities of the credit voucher on the application interface, or is a recommended pay period quantity displayed on the application interface.

In conclusion, in the credit voucher-based payment method provided in an implementation, in the order payment process, based on the first payment channel list that includes the application identifier of the credit voucher application and that is delivered by the server, in response to that the application identifier in the first payment channel list is triggered, that is, in response to that the application identifier is triggered to perform the credit voucher application in the order payment, the jump to the credit voucher subprogram is made based on the payment request associated with the application identifier, to perform the credit voucher application and the credit voucher activation in the credit voucher subprogram, and perform payment channel binding on the activated credit voucher by using the server. As such, the activated credit voucher is bound to the payment channel list through payment channel binding, and the second payment channel list that includes the credit voucher is obtained. After receiving the second payment channel list delivered by the server, the second payment channel list is displayed to provide a basis for selecting the credit voucher to perform order payment. After selecting the credit voucher from the second payment channel list to perform order payment, the payment user submits the payment instruction with the credit voucher to the server, to perform order payment based on the credit voucher. As such, the credit voucher application, the credit voucher activation, and the payment channel binding on the credit voucher are introduced in the order payment process. As such, while the credit voucher application, the credit voucher activation, and recommendation to use the credit voucher to perform order payment are implemented in the order payment process, the credit voucher application, the credit voucher activation, the payment channel binding on the credit voucher, and order payment performed based on the credit voucher are integrated in the order payment process.

The above provided implementation process of the credit voucher-based payment method can be executed by a user terminal. Another implementation process of the credit voucher-based payment method provided in the following method implementations can be executed by a server. The two implementation processes can cooperate with each other in an execution process. Therefore, for reading of the above implementation process, references can be made to corresponding content of the following another credit voucher-based payment method implementation. Correspondingly, for reading of the following another credit voucher-based payment method implementation, references can also be made to corresponding content of the above method implementation.

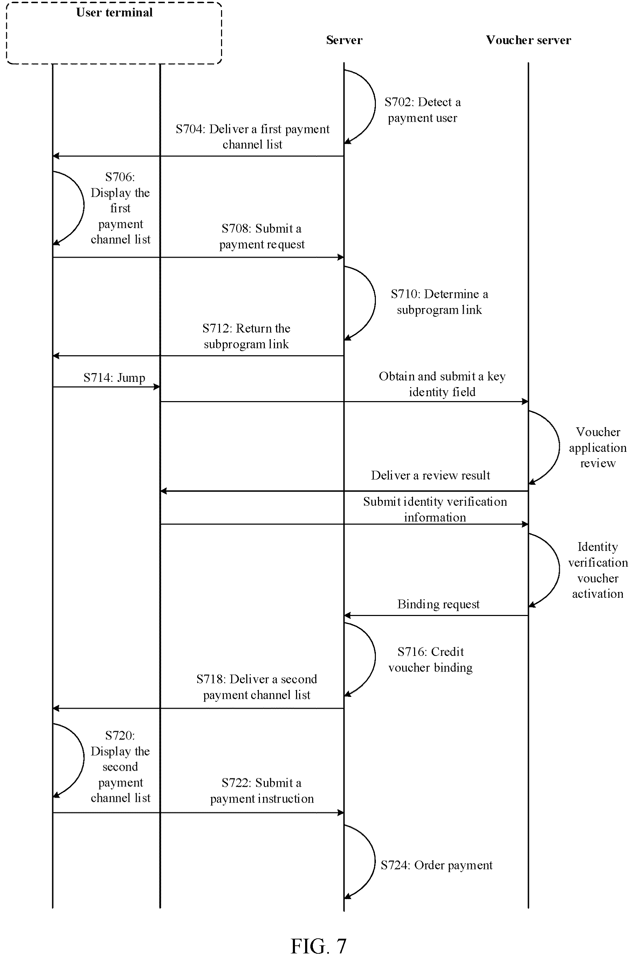

The following further describes the credit voucher-based payment method provided in an implementation with reference to FIG. 7 by using an example in which the credit voucher-based payment method provided in an implementation is applied to an order payment scenario. As shown in FIG. 7, the credit voucher-based payment method applied to the order payment scenario specifically includes the following steps.

For example, a first payment channel list includes an application identifier of a credit voucher application.

Step S706: Receive and display a first payment channel list that is generated for order information and that is delivered by a server.

The first payment channel list includes an application identifier of a credit voucher application.

Step S708: Submit, to the server, a payment request that includes the application identifier.

Step S714: Jump to a credit voucher subprogram based on a subprogram link returned by the server, to perform the credit voucher application and a credit voucher activation in the credit voucher subprogram.

For example, the performing the credit voucher application includes:

The credit voucher subprogram obtains a key identity field entered through an application interface, and submits the key identity field to a voucher server.

The voucher server determines voucher application data based on the key identity field, performs voucher application review, and delivers a review result to the credit voucher subprogram.

For example, the performing the credit voucher application includes: receiving and displaying, by the credit voucher subprogram, an activation interface that includes a review success result and that is delivered by a voucher server, and submitting, to the voucher server, identity verification information entered through the activation interface; and after the voucher server successfully performs identity verification based on the identity verification information, activating the credit voucher, and after the activating the credit voucher succeeds, sending a voucher binding request to the server through interface invoking.

The server performs payment channel binding on an activated credit voucher.

Step S720: Receive and display a second payment channel list that includes the credit voucher and that is delivered by the server.

Step S722: Submit an obtained payment instruction with the credit voucher to the server, to perform order payment based on the credit voucher.

Step S706, step S708, step S714, step S720, and step S722 that are provided in an implementation are performed by a user terminal. It should be noted that, step S706, step S708, step S714, step S720, and step S722 that are performed by the user terminal can cooperate, in an execution process, with step S702, step S704, step S710, step S712, step S716, step S718, and step S724 that are performed by the server in the following implementation. Therefore, for reading of an implementation, references can be made to corresponding content of step S702, step S704, step S710, step S712, step S716, step S718, and step S724 that are provided in the following method implementation. For reading of the following method implementation, references can be made to corresponding content of step S706, step S708, step S714, step S720, and step S722 that are provided in an implementation.

It should be noted that, any one or a combination of any plurality of step S706, step S708, step S714, step S720, and step S722 can be combined with any one or a combination of any plurality of step S202 to step S208 into a new implementation according to an actual deployment requirement. In addition, any one or more technical features can be selected from step S706, step S708, step S714, step S720, and step S722 according to an actual deployment requirement, and are combined with any one or more technical features provided in step S202 to step S208 to form a new implementation. Alternatively, any one or more technical features of S706, step S708, step S714, step S720, and step S722 can be replaced, according to an actual deployment requirement, with any one or more technical features provided in step S202 to step S208 to form a new implementation. Details are omitted herein for simplicity.

One or more implementations of another credit voucher-based payment method provided in the present specification are as follows:

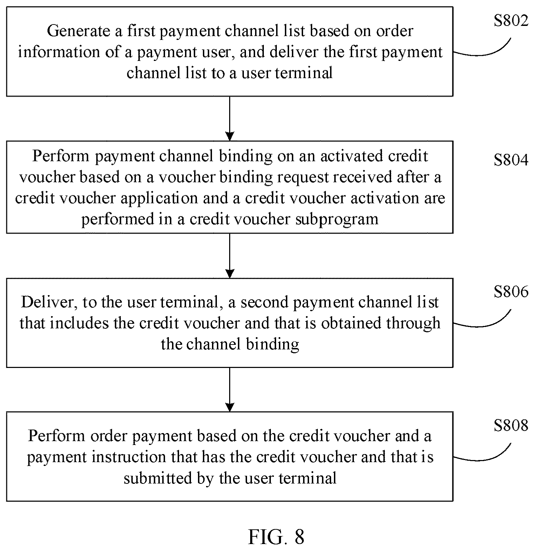

As shown in FIG. 8, the credit voucher-based payment method provided in an implementation specifically includes steps S802 to S808.

Step S802: Generate a first payment channel list based on order information of a payment user, and deliver the first payment channel list to a user terminal.

In an implementation, in a process of paying an order of the payment user, the first payment channel list is generated based on the order information of the payment user, and the first payment channel list is delivered to the user terminal of the payment user. The order information of the payment user can be submitted by the user terminal of the payment user, or can be forwarded by a merchant device or a merchant server of a merchant that deals with the payment user.

After the first payment channel list is delivered to the user terminal, the user terminal receives the delivered first payment channel list generated for the order information, and displays the first payment channel list. For example, the first payment channel list can be displayed on a payment interface. For example, the first payment channel list is displayed on a payment interface of an application program. In a process of generating the first payment channel list, to implement recommendation of a credit voucher application to the payment user in an order payment process, an application identifier of the credit voucher application can be configured in the first payment channel list. As such, the credit voucher application is recommended to the payment user in a process of displaying the first payment channel list to the payment user.

For example, the first payment channel list includes the application identifier of the credit voucher application. A credit voucher is a media-type voucher, such as an electronic credit card or an entity credit card, that records account related information of a holding user, that has a credit limit and can be used for payment based on the credit limit, and that provides a related service for the holding user. The credit voucher application is a process of applying for the credit voucher from a voucher institution that provides the credit voucher. The application identifier can be one or more of voucher related information of the credit voucher or recommendation information of the credit voucher application recommended to the payment user.

For example, the application identifier includes one or more of identification information of the credit voucher, voucher benefit information, or voucher limit information. The identification information of the credit voucher can be name information or recommendation information of the credit voucher. The voucher benefit information is benefit information that can be obtained after the credit voucher application is performed. For example, the voucher benefit information can be "50 yuan off". For example, the voucher benefit can be that 50 yuan is off in response to that order payment is performed after the payment user performs the credit voucher application. The voucher limit information is a voucher limit of the credit voucher obtained after the credit voucher application is performed. The voucher limit is a limit of credit payment that can be performed by the payment user based on the credit voucher.

In an example implementation, the credit voucher application is recommended to the payment user in the order payment process. For example, the credit voucher application is recommended by adding the application identifier of the credit voucher application to the first payment channel list. In view of this, whether to recommend the credit voucher application to a payment user who currently performs order payment needs to be detected before the first payment channel list is generated. For example, a predetermined user group to which the credit voucher application is recommended is predetermined. In response to that the payment user who currently performs order payment exists in the predetermined user group, the credit voucher application is recommended to the payment user. In other words, the first payment channel list including the application identifier of the credit voucher application is returned. In an optional implementation provided in an implementation, payment user detection is performed in the following manner: detecting whether a payment user corresponding to the order information exists in the predetermined user group.

In response to that the payment user corresponding to the order information exists in the predetermined user group, it indicates that the payment user who currently performs order payment exists in the predetermined user group. In other words, the payment user who currently performs order payment is a predetermined payment user to which the credit voucher application is recommended. A process of generating the first payment channel list based on the order information of the payment user and delivering the first payment channel list to the user terminal is performed.

In response to that the payment user corresponding to the order information does not exist in the predetermined user group, it indicates that the payment user who currently performs order payment does not exist in the predetermined user group. In other words, the payment user who currently performs order payment is not a predetermined payment user to which the credit voucher application is recommended. In this case, a payment channel list (the payment channel list does not include the application identifier of the credit voucher application) can be generated for the order information, and delivered to the user terminal.

To implement integration of the order payment, the credit voucher application, a credit voucher activation, and payment channel binding performed on the credit voucher, the application identifier of the credit voucher application is configured in the first payment channel list in the order payment process, and the credit voucher application can be recommended to a part of payment users who has applied for the credit voucher application from the voucher institution and has obtained the credit voucher. In other words, an application for the credit voucher from the voucher institution again (the second time) is recommended to the part of payment users. For example, the predetermined user group includes a voucher user who has applied for obtaining the credit voucher from a voucher institution to which the credit voucher subprogram belongs. Herein, the voucher user is a user who has performed the credit voucher at the voucher institution and has obtained the credit voucher before currently performing order payment.

In an implementation, to improve validity of recommending the credit voucher application to the payment user in the order payment process, and further improve conversion of actually performing the credit voucher application by the payment user who performs order payment, more comprehensive and effective recommendation information can be configured in the application identifier included in the first payment channel list. For example, one or more of the voucher benefit information or the voucher limit information is configured in the application identifier, so that the payment user who performs order payment can be more clearly aware of one or more of a benefit or a limit of a currently recommended credit voucher.

For example, in an optional implementation, the determining the application identifier includes: determining a user recommendation preference based on second user behavior data of an application program; in response to that the user recommendation preference is a first recommendation preference, adding, to the application identifier, voucher benefit information of performing the credit voucher application, where the voucher benefit information is determined by entering the second user behavior data into a benefit pricing algorithm to perform benefit pricing calculation; and in response to that the user recommendation preference is a second recommendation preference, adding, to the application identifier, voucher limit information of performing the credit voucher application.

In addition, after the user recommendation preference is determined based on the second user behavior data of the application program, in response to that the determined user recommendation preference is a third user preference, the voucher benefit information of performing the credit voucher application can be further added to the application identifier, and the voucher limit information of performing the credit voucher application is added to the application identifier.

Herein, the second user behavior data of the application program is data that is accumulated by the payment user in a use process of the application program and that is related to a recommendation preference of the payment user, for example, one or more of recommendation information in a historical payment process of the payment user, or a trigger action record or an access record of the payment user for the recommendation information in the historical payment process. It should be noted that, in consideration that the second user behavior data belongs to user privacy to a certain extent, a payment application may obtain user data authorization before obtaining the second user behavior data of the application program. A data authorization manner can be that a data authorization reminder is sent to a user, and the user can obtain use authorization of the second user behavior data after confirming the data authorization reminder by using an instruction. In addition, data authorization can alternatively be performed in another manner. The use authorization of the second user behavior data is obtained after confirmation is performed based on the instruction of the user.

In example implementations, in a process in which the payment user selects a payment channel from the payment channel list for payment, payment selection preferences of different payment users may be different. In view of this, in a process of recommending the credit voucher application to the payment user based on the payment channel list, to improve conversion of participating in the credit voucher application by the payment user who performs order payment, different rankings can be set for the application identifier in first payment channel lists of different payment users. As such, payment efficiency of the payment user who performs order payment can be ensured while a conversion rate of participating in the credit voucher application by the payment user is improved.

For example, in an optional implementation, the method further includes: determining a ranking of the application identifier in the first payment channel list, the determining the ranking including: determining a user payment preference based on third user behavior data of an application program, and determining the ranking of the application identifier in the first payment channel list based on the user payment preference; In addition, the ranking of the application identifier in the first payment channel list can alternatively be determined based on a recommendation policy of the application program. The recommendation policy can be a policy of a recommendation activity or a marketing activity. The ranking of the application identifier in the first payment channel list is a sorting location of the application identifier in the first payment channel list.

The third user behavior data of the application program is data that is accumulated by the payment user in a use process of the application program and that is related to a payment preference of the payment user, for example, a payment channel selected by the payment user in a historical payment process, and a ranking of the payment channel. It should be noted that, in consideration that the third user behavior data belongs to user privacy to a certain extent, data authorization can be performed on the third user behavior data in a manner similar to that of the second user behavior data. In particular, the third user behavior data and the second user behavior data can alternatively be the same user behavior data. In this case, the third user behavior data and the second user behavior data can include one or more of the data that is accumulated by the payment user in the use process of the application program and that is related to the payment preference of the payment user, or the data that is accumulated by the payment user in the use process of the application program and that is related to the recommendation preference of the payment user.

Step S804: Perform payment channel binding on an activated credit voucher based on a voucher binding request received after a credit voucher application and a credit voucher activation are performed in a credit voucher subprogram.

After the first payment channel list that includes the application identifier of the credit voucher application is delivered to the user terminal, the user terminal displays the first payment channel list. On this basis, the payment user can select any payment channel other than the application identifier from the first payment channel list for order payment, or can select the application identifier from the first payment channel list for order payment. A difference lies in that in response to that the application identifier in the first payment channel list is triggered, the credit voucher application is first performed in the order payment process. In an implementation, on the basis that the payment user selects the application identifier in the first payment channel list, a jump to the credit voucher subprogram is made based on the payment request associated with the application identifier, to perform the credit voucher application and the credit voucher activation in the credit voucher subprogram, and perform payment channel binding on the activated credit voucher by using the server.

For example, the user terminal jumps to the credit voucher subprogram based on the payment request associated with the application identifier, and performs the credit voucher application and the credit voucher activation in the credit voucher subprogram.

In a process of jumping to the credit voucher subprogram based on the payment request associated with the application identifier, different application identifiers may correspond to different voucher institutions. Correspondingly, for jumping to the credit voucher subprogram, jumps to credit voucher subprograms in different voucher institutions may be made. In an optional implementation provided in an implementation, the payment request that includes the application identifier and that is submitted by the user terminal is received; a subprogram link (namely, a subprogram link of the credit voucher subprogram) of the voucher institution corresponding to the application identifier is determined, and returned to the user terminal. After the subprogram link is returned, the user terminal can jump to the credit voucher subprogram based on the returned subprogram link.

In an example execution process, the first payment channel list can be displayed on a payment interface of the application program. On this basis, in a process of jumping to the credit voucher subprogram, in response to that the credit voucher subprogram runs in the application program, a jump from the payment interface to the credit voucher subprogram can be made; or in response to that the payment interface is provided by the application program, a jump from the application program to the credit voucher subprogram can be made.

In addition, the credit voucher subprogram can be further replaced with an institution page of a voucher institution in the application program. Correspondingly, the jump to the credit voucher subprogram based on the payment request associated with the application identifier can be replaced with a jump to an institution page of the voucher institution corresponding to the application identifier based on the payment request associated with the application identifier; and performing the credit voucher application and the credit voucher activation in the credit voucher subprogram can be replaced with performing the credit voucher application and the credit voucher activation on the institution page.

In an implementation, after the jump to the credit voucher subprogram is made, the credit voucher application and the credit voucher activation are performed in the credit voucher subprogram. The following separately provides specific descriptions of processes of performing the credit voucher application and the credit voucher activation in the credit voucher subprogram.

### (1) Credit voucher application

In an optional implementation, the performing the credit voucher application includes: obtaining, by the credit voucher subprogram, a key identity field entered through an application interface, and submitting the key identity field to a voucher server; and determining, by the voucher server, voucher application data based on the key identity field, performing voucher application review, and delivering a review result to the credit voucher subprogram.

The key identity field includes one or more of a name, Pinyin (Pinyin of the name), or a document number (document number of an identity document). In a process in which the voucher server determines the voucher application data based on the key identity field and performs voucher application review, the voucher server can query a historical application record based on the key identity field, and perform voucher application review based on application data determined based on the historical application record, to obtain a review result. The review result is a review success result or a review failure result.

Further, to improve application efficiency of the credit voucher, reduce duration of order payment, improve order payment efficiency of the payment user, improve a success rate of the credit voucher application, and reduce an occurrence probability of a review failure or re-review due to a wrong key identity field entered by the payment user, for example, the application interface includes a field collection control unit; and after the field collection control unit is triggered, an identity acquisition interface is invoked to obtain the key identity field from an application program and write the key identity field into the application interface, and the credit voucher subprogram runs in the application program.

In addition, after the jump to the credit voucher subprogram is made, to further improve a willingness of the payment user to perform the credit voucher application, and further improve conversion of participating in the credit voucher application by the payment user who performs order payment, the credit voucher application can be further recommended to the payment user on an application interface of the credit voucher application. For example, the voucher server obtains voucher recommendation data of the application interface by invoking a voucher recommendation interface.

For example, in an optional implementation, the determining the voucher recommendation data includes: determining a page material type based on first user behavior data of an application program, and determining a page material and a dynamic display parameter that are of the page material type; and using the page material and the dynamic display parameter as the voucher recommendation data.

The first user behavior data of the application program is payment related data accumulated by the payment user in the use process of the application program, for example, historical payment related data of the payment user, or access data of performing access and browsing in the application program. It should be noted that, in consideration that the first user behavior data belongs to user privacy to a certain extent, data authorization can be performed on the first user behavior data in a manner similar to that of the second user behavior data. In particular, the first user behavior data, the third user behavior data, and the second user behavior data can alternatively be the same user behavior data. In this case, the first user behavior data, the third user behavior data, and the second user behavior data can include one or more of the payment related data, the data that is accumulated by the payment user in the use process of the application program and that is related to the payment preference of the payment user, or the data that is accumulated by the payment user in the use process of the application program and that is related to the recommendation preference of the payment user.

The page material type is a material type of a page material that is displayed on the application interface and that is recommended to the payment user. The page material can be one or more of a text, an image, an animation, a voice, or a video. Correspondingly, the material type can be one or more of a text type, an image type, an animation type, a voice type, or a video type. The dynamic display parameter is a related parameter of displaying the page material on the application interface, for example, one or more of a location parameter, a location change parameter, or a time parameter corresponding to the location parameter of displaying the page material on the application interface, and one or more of a size parameter, a font parameter, or a color parameter of displaying the page material on the application interface,

As described above, in an implementation, the order payment and the credit voucher application are integrated in the order payment process. On this basis, to improve payment experience of the payment user in a scenario in which the credit voucher application and the order payment are integrated, a payment waiting page can be displayed after a process of entering the key identity field on the application interface is completed and before the review result of the voucher application review in a credit voucher application process is obtained.

For example, the credit voucher subprogram displays a payment waiting page after submitting the key identity field to the voucher server, and closes the payment waiting page after receiving the review result;

In addition, the payment waiting page can be further displayed through cooperation between the credit voucher subprogram and the application program. For example, after submitting the key identity field to the voucher server, the credit voucher subprogram returns a payment waiting duration to the application program, and the application program displays the payment waiting page based on the payment waiting duration; or after submitting the key identity field to the voucher server, the credit voucher subprogram returns a payment waiting instruction to the application program, and the application program displays the payment waiting page based on the payment waiting instruction, and closes the payment waiting page after receiving a review success result returned by the credit voucher subprogram.

It should be noted that, after the payment user performs the credit voucher application, a voucher application review process performed by the voucher server is an online review process, and duration required for this review process can be controlled to fall within a 10-second range. Therefore, he credit voucher application and the credit voucher activation introduced in the order payment process provided in an implementation are continuous or relatively continuous processes. Therefore, the order payment process and the credit voucher application and the credit voucher activation processes can be considered as a continuous integrated processing process. Alternatively, from a perspective of interaction of the payment user, the payment user performs the credit voucher application and the credit voucher activation in the order payment process, and can complete the credit voucher application in a short time (within the 10-second range), and the order payment is not interrupted due to a long time required for the credit voucher application.

### (2) Credit voucher activation

In an implementation, the credit voucher application and the credit voucher activation are introduced in the order process. In addition, in order that the credit voucher obtained through the credit voucher application and the credit voucher activation can be used for a current order payment, the obtained credit voucher is bound to the payment channel list of the payment user. As such, the payment user can select the credit voucher from the payment channel list in a current order payment process for order payment, to implement integration of the order payment, the credit voucher application, the credit voucher activation, and the credit voucher binding.

For example, the credit voucher activation can be implemented in the following optional implementation: receiving and displaying, by the credit voucher subprogram, an activation interface that includes a review success result and that is delivered by a voucher server, and submitting, to the voucher server, identity verification information entered through the activation interface; and after the voucher server successfully performs identity verification based on the identity verification information, activating the credit voucher, and after the activating the credit voucher succeeds, sending a voucher binding request through interface invoking.

The activation interface can display voucher information of a credit voucher obtained after the payment user successfully performs the credit voucher application. In addition, the activation interface can be further configured with a verification component for identity verification. Further, an activation control can be further configured on the activation interface. A state of the activation control before identity verification succeeds is a non-triggerable state. After identity verification succeeds, the activation control configured on the activation interface is updated to a triggerable state. In this case, the payment user can initiate the credit voucher activation and the credit voucher binding by triggering the activation control.

Then, in response to that the payment user initiates the credit voucher activation by triggering the activation control, to enhance awareness of the payment user for the credit voucher activation process and the credit voucher binding process, an activation complete reminder can be displayed on the activation interface after the credit voucher activation is completed, or a binding complete reminder can be displayed on the activation interface after the credit voucher binding is completed, or an activation complete reminder and a binding complete reminder can be displayed on the activation interface after both the voucher activation and the credit voucher binding are completed.

In addition, in an implementation, on the basis of implementing integration of the order payment, the credit voucher application, the credit voucher activation, and the credit voucher binding, to improve efficiency of the credit voucher activation and reduce duration required for the order payment, the performing the credit voucher activation can further include: The credit voucher subprogram receives and displays the activation interface that includes the review success result and that is delivered by the voucher server, and submits an activation instruction to the voucher server. The voucher server activates the credit voucher based on the activation instruction, and sends the voucher binding request through interface invoking after activation succeeds.

In example implementations, after the credit voucher application is performed in the order payment process, some payment users may temporarily have no willingness to activate the credit voucher or the payment user wants to delay activating the credit voucher. In view of this, a payment control unit for returning to the payment channel list can be set on the activation interface, to ensure that the order payment is smoothly performed, ensure an order payment success rate, and provide the payment user with a more flexible choice of the credit voucher application and the credit voucher activation introduced in the order payment process. On this basis, the payment user can trigger the payment control unit to continue an order payment procedure.

For example, the activation interface includes a payment control function or payment control unit, and in response to that the payment control function or payment control unit is triggered, an application program is returned from the credit voucher subprogram, and order payment is performed based on a target payment channel selected from a payment channel list displayed by the application program.

It should be noted that the payment channel list, the first payment channel list, and the second payment channel list are all payment channel lists of the payment user, and a difference lies in that the payment channel list includes payment channels of the payment user in the application program; the first payment channel list is obtained by adding the application identifier of the credit voucher application based on the payment channel list, that is, the first payment channel list includes the application identifier and the payment channel of the payment user in the application program; the second payment channel list is obtained by adding the credit voucher based on the payment channel list (the credit voucher is added to the payment channel list as a payment channel after the credit voucher is bound), that is, the second payment channel list includes the credit voucher and the payment channel of the payment user in the application program.

In an example implementation, after the credit voucher application and the credit voucher activation are performed in the credit voucher subprogram, the voucher binding request is received, and then payment channel binding is performed on the activated credit voucher based on the voucher binding request. For example, the activated credit voucher is bound to the payment channel list of the payment user, to obtain the second payment channel list.

The voucher binding request can be sent by the voucher server after the credit voucher application and the credit voucher activation are performed in the credit voucher subprogram. For example, a binding success prompt is returned to the voucher server after payment channel binding is performed, and the voucher server delivers a return instruction to the credit voucher subprogram based on the binding success prompt; and the credit voucher subprogram jumps to a payment interface of the second payment channel list based on the delivered return instruction.

Step S806: Deliver, to the user terminal, a second payment channel list that includes the credit voucher and that is obtained through the channel binding.

After the credit voucher application and the credit voucher activation are performed in the credit voucher subprogram, the activated credit voucher is bound to the payment channel list of the payment user to obtain the second payment channel list, and then the second payment channel list that includes the credit voucher and that is obtained through the channel binding is delivered to the user terminal.

On the basis that the user terminal obtains the delivered second payment channel list that includes the credit voucher and displays the second payment channel list in the order payment process, the payment user can select any payment channel in the second payment channel list to perform order payment. In response to that any payment channel other than the credit voucher in the second payment channel list is selected, an order payment instruction with the selected any payment channel is submitted to the server. Herein, the order payment instruction that has the any payment channel and that is submitted by the user terminal is received, and order payment is performed through the selected any payment channel.

S808: Perform order payment based on the credit voucher and a payment instruction that has the credit voucher and that is submitted by the user terminal.

After the second payment channel list that includes the credit voucher and that is obtained through the channel binding is delivered to the user terminal, the payment user can select any payment channel in the second payment channel list to perform order payment, or can select the credit voucher in the second payment channel list to perform payment. In an implementation, in response to that the payment user selects the credit voucher in the second payment channel list to perform payment, the payment instruction with the credit voucher is obtained and submitted to the server. Herein, order payment is performed based on the credit voucher and the payment instruction that has the credit voucher and that is submitted by the user terminal.

In addition, in a process of performing order payment based on the credit voucher, installment payment or split payment of the order payment can be further performed based on the credit voucher. For example, in a scenario in which the order payment, the credit voucher application, and the credit voucher activation are integrated in an implementation, a pay period quantity can be configured or selected in the credit voucher application. For example, a recommended pay period quantity of the credit voucher is displayed on the application interface, or a pay period quantity selection control is configured on the application interface, and all candidate pay period quantities of the credit voucher are displayed after the pay period quantity selection control is triggered.

On this basis, in an optional implementation, the performing order payment based on the credit voucher includes: obtaining a pay period quantity submitted on the application interface, and creating an installment payment order of the order information based on the pay period quantity.

The pay period quantity is selected and determined from all candidate pay period quantities of the credit voucher on the application interface, or is a recommended pay period quantity displayed on the application interface.

The following further describes the credit voucher-based payment method provided in an implementation with reference to FIG. 7 by using an example in which the credit voucher-based payment method provided in an implementation is applied to an order payment scenario. As shown in FIG. 7, the credit voucher-based payment method applied to the order payment scenario specifically includes the following steps.

Step S702: Detect whether a payment user corresponding to order information exists in a predetermined user group.

For example, the predetermined user group includes a voucher user who has applied for obtaining a credit voucher from a voucher institution to which a credit voucher subprogram belongs.

In response to that the payment user corresponding to the order information exists in the predetermined user group, step S704 is to be performed.

In response to that the payment user corresponding to the order information does not exist in the predetermined user group, a payment channel list (which does not include an application identifier of a credit voucher application) is generated for the order information, and delivered to a user terminal.

Step S704: Generate a first payment channel list based on the order information of the payment user, and deliver the first payment channel list to the user terminal.

For example, the first payment channel list includes the application identifier of the credit voucher application.

Step S710: Determine a subprogram link of a voucher institution corresponding to an application identifier included in a payment request.

Step S712: Return, to the user terminal, the subprogram link of the voucher institution corresponding to the application identifier.

Step S716: In response to a voucher binding request received after a credit voucher application and a credit voucher activation are performed in the credit voucher subprogram, bind an activated credit voucher to the payment channel list to obtain a second payment channel list.

For example, the performing the credit voucher application includes:

The credit voucher subprogram obtains a key identity field entered through an application interface, and submits the key identity field to a voucher server.

The voucher server determines voucher application data based on the key identity field, performs voucher application review, and delivers a review result to the credit voucher subprogram.

For example, the performing the credit voucher application includes: receiving and displaying, by the credit voucher subprogram, an activation interface that includes a review success result and that is delivered by a voucher server, and submitting, to the voucher server, identity verification information entered through the activation interface; and after the voucher server successfully performs identity verification based on the identity verification information, activating the credit voucher, and after the activating the credit voucher succeeds, sending a voucher binding request to the server through interface invoking.

Step S718: Deliver, to the user terminal, the second payment channel list that includes the credit voucher and that is obtained through the channel binding.

S724: Perform order payment based on the credit voucher and a payment instruction that has the credit voucher and that is submitted by the user terminal.

It should be noted that, any one or a combination of any plurality of step S702, step S704, step S710, step S712, and step S716 can be combined with any one or a combination of any plurality of step S802 to step S808 into a new implementation according to an actual deployment requirement. In addition, any one or more technical features can be selected from step S702, step S704, step S710, step S712, and step S716 according to an actual deployment requirement, and are combined with any one or more technical features provided in step S802 to step S808 to form a new implementation. Alternatively, any one or more technical features of S702, step S704, step S710, step S712, and step S716 can be replaced, according to an actual deployment requirement, with any one or more technical features provided in step S802 to step S808 to form a new implementation. Details are omitted herein for simplicity.

An implementation of a credit voucher-based payment apparatus provided in the present specification is as follows:

In the above implementations, the credit voucher-based payment method is provided, and can be applied to a user terminal. Correspondingly, a credit voucher-based payment apparatus is further provided, and can be run on a user terminal. The following provides descriptions with reference to the accompanying drawings.

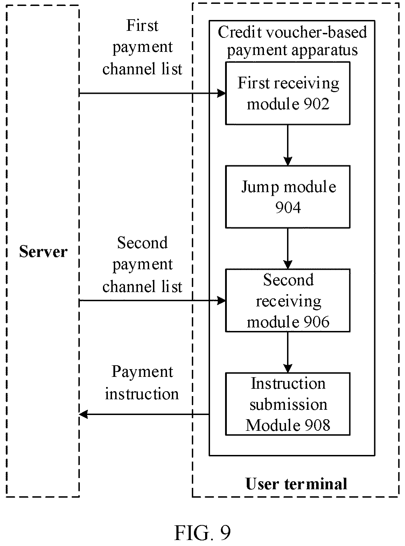

FIG. 9 is a schematic diagram illustrating an implementation of a credit voucher-based payment apparatus according to an implementation.

The apparatus implementations correspond to the method implementations, and therefore are briefly described. For related parts, references can be made to corresponding descriptions of the above provided method implementations. The apparatus implementations described below are merely examples.

An implementation provides a credit voucher-based payment apparatus. The apparatus includes: a first receiving module 902, configured to receive and display a first payment channel list that is generated for order information and that is delivered by a server, the first payment channel list including an application identifier of a credit voucher application; a jump module 904, configured to jump to a credit voucher subprogram based on a payment request associated with the application identifier, to perform the credit voucher application and a credit voucher activation in the credit voucher subprogram, and perform payment channel binding on an activated credit voucher by using the server; a second receiving module 906, configured to receive and display a second payment channel list that includes the credit voucher and that is delivered by the server; and an instruction submission module 908, configured to submit an obtained payment instruction with the credit voucher to the server, to perform order payment based on the credit voucher.

An implementation of an credit voucher-based payment apparatus provided in the present specification is as follows:

In the above implementations, the credit voucher-based payment method is provided, and can be applied to a server. Correspondingly, a credit voucher-based payment apparatus is further provided, and can be run on a server. The following provides descriptions with reference to the accompanying drawings.

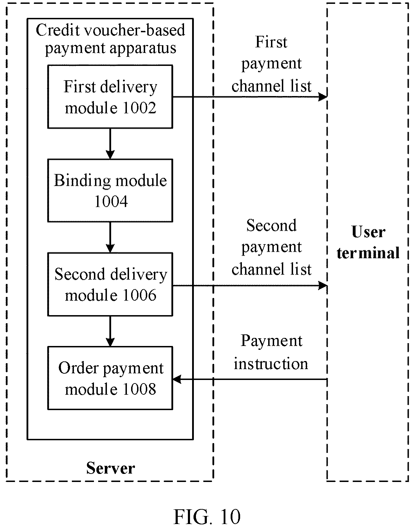

FIG. 10 is a schematic diagram illustrating an implementation of a credit voucher-based payment apparatus according to an implementation.

The apparatus implementations correspond to the method implementations, and therefore are briefly described. For related parts, references can be made to corresponding descriptions of the above provided method implementations. The apparatus implementations described below are merely examples.

An implementation provides a credit voucher-based payment apparatus. The apparatus includes: a first delivery module 1002, configured to: generate a first payment channel list based on order information of a payment user, and deliver the first payment channel list to a user terminal, the first payment channel list including an application identifier of a credit voucher application; a binding module 1004, configured to perform payment channel binding on an activated credit voucher based on a voucher binding request received after a credit voucher application and a credit voucher activation are performed in a credit voucher subprogram; a second delivery module 1006, configured to deliver, to the user terminal, a second payment channel list that includes the credit voucher and that is obtained through the channel binding; and an order payment module 1008, configured to perform order payment based on the credit voucher and a payment instruction that has the credit voucher and that is submitted by the user terminal.

An implementation of a credit voucher-based payment device provided in the present specification is as follows:
Corresponding to the above described credit voucher-based payment method that can be applied to a user terminal, based on the same technical concept, one or more implementations of the present specification further provide a credit voucher-based payment device. The credit voucher-based payment device is configured to perform the above provided credit voucher-based payment method that can be applied to a user terminal. FIG. 8 is a schematic structural diagram illustrating a credit voucher-based payment device according to one or more implementations of the present specification.

An implementation provides a credit voucher-based payment device, including:

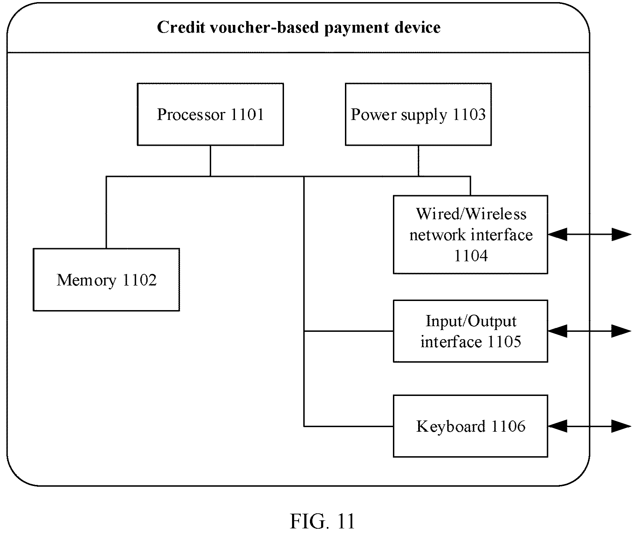

As shown in FIG. 11, the credit voucher-based payment device can have large differences due to different configuration or performance, and can include one or more processors 1101 and memories 1102. The memory 1102 can store one or more storage application programs or data. The memory 1102 can be used for short-term storage or persistent storage. The application program stored in the memory 1102 can include one or more modules (not shown in the figure), and each module can include a series of computer-executable instructions in the credit voucher-based payment device. Further, the processor 1101 can be configured to communicate with the memory 1102, and execute the series of computer-executable instructions in the memory 1102 on the credit voucher-based payment device. The credit voucher-based payment device can further include one or more power supplies 1103, one or more wired or wireless network interfaces 1104, one or more input/output interfaces 1105, one or more keyboards 1106, etc.

In an example implementation, the credit voucher-based payment device includes a memory and one or more programs, and the one or more programs are stored in the memory. The one or more programs can include one or more modules, and each module can include a series of computer-executable instructions in the credit voucher-based payment device. The one or more programs are configured to be executed by one or more processors and include computer-executable instructions used to perform the following operations: receiving and displaying a first payment channel list that is generated for order information and that is delivered by a server, the first payment channel list including an application identifier of a credit voucher application; jumping to a credit voucher subprogram based on a payment request associated with the application identifier, to perform the credit voucher application and a credit voucher activation in the credit voucher subprogram, and perform payment channel binding on an activated credit voucher by using the server; receiving and displaying a second payment channel list that includes the credit voucher and that is delivered by the server; and submitting an obtained payment instruction with the credit voucher to the server, to perform order payment based on the credit voucher.

An implementation of an credit voucher-based payment device provided in the present specification is as follows:

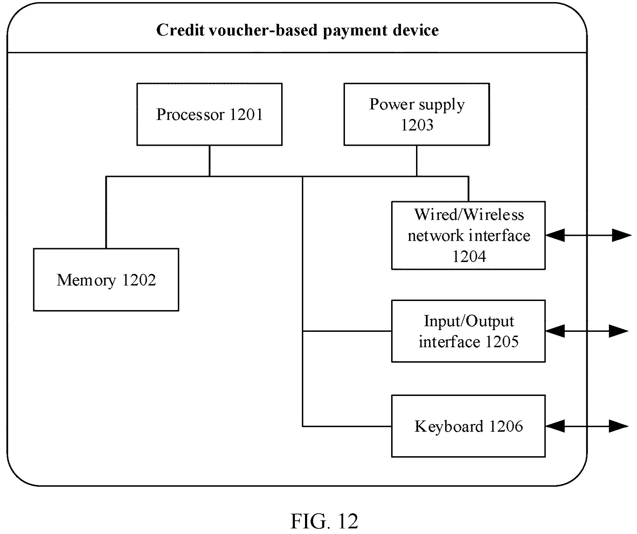

Corresponding to the above described another credit voucher-based payment method that can be applied to a server, based on the same technical concept, one or more implementations of the present specification further provide another credit voucher-based payment device. The credit voucher-based payment device is configured to perform the above provided another credit voucher-based payment method that can be applied to a server. FIG. 12 is a schematic structural diagram illustrating another credit voucher-based payment device according to one or more implementations of the present specification.

An implementation provides a credit voucher-based payment device, including:

As shown in FIG. 12, the credit voucher-based payment device can have large differences due to different configuration or performance, and can include one or more processors 1201 and memories 1202. The memory 1202 can store one or more storage application programs or data. The memory 1202 can be used for short-term storage or persistent storage. The application program stored in the memory 1202 can include one or more modules (not shown in the figure), and each module can include a series of computer-executable instructions in the credit voucher-based payment device. Further, the processor 1201 can be configured to communicate with the memory 1202, and execute the series of computer-executable instructions in the memory 1202 on the credit voucher-based payment device. The credit voucher-based payment device can further include one or more power supplies 1203, one or more wired or wireless network interfaces 1204, one or more input/output interfaces 1205, one or more keyboards 1206, etc.

In an example implementation, the credit voucher-based payment device includes a memory and one or more programs, and the one or more programs are stored in the memory. The one or more programs can include one or more modules, and each module can include a series of computer-executable instructions in the credit voucher-based payment device. The one or more programs are configured to be executed by one or more processors and include computer-executable instructions used to perform the following operations: generating a first payment channel list based on order information of a payment user, and delivering the first payment channel list to a user terminal, the first payment channel list including an application identifier of a credit voucher application; performing payment channel binding on an activated credit voucher based on a voucher binding request received after a credit voucher application and a credit voucher activation are performed in a credit voucher subprogram; delivering, to the user terminal, a second payment channel list that includes the credit voucher and that is obtained through the channel binding; and performing order payment based on the credit voucher and a payment instruction that has the credit voucher and that is submitted by the user terminal.

An implementation of a computer-readable storage medium provided in the present specification is as follows:

Corresponding to the above described credit voucher-based payment method, based on the same technical concept, one or more implementations of the present specification further provide a computer-readable storage medium.

The computer-readable storage medium provided in an implementation is configured to store computer-executable instructions, and in response to that the computer-executable instructions are executed, the following procedure is implemented: receiving and displaying a first payment channel list that is generated for order information and that is delivered by a server, the first payment channel list including an application identifier of a credit voucher application; jumping to a credit voucher subprogram based on a payment request associated with the application identifier, to perform the credit voucher application and a credit voucher activation in the credit voucher subprogram, and perform payment channel binding on an activated credit voucher by using the server; receiving and displaying a second payment channel list that includes the credit voucher and that is delivered by the server; and submitting an obtained payment instruction with the credit voucher to the server, to perform order payment based on the credit voucher.

It should be noted that, an implementation of the computer-readable storage medium in the present specification and an implementation of the credit voucher-based payment method in the present specification are based on the same invention concept. Therefore, for details of this implementation, references can be made to an implementation of the above corresponding method. Details are omitted for simplicity.

An implementation of another computer-readable storage medium provided in the present specification is as follows:
Corresponding to the above described another credit voucher-based payment method, based on the same technical concept, one or more implementations of the present specification further provide another computer-readable storage medium.

The computer-readable storage medium provided in an implementation is configured to store computer-executable instructions, and in response to that the computer-executable instructions are executed, the following procedure is implemented: generating a first payment channel list based on order information of a payment user, and delivering the first payment channel list to a user terminal, the first payment channel list including an application identifier of a credit voucher application; performing payment channel binding on an activated credit voucher based on a voucher binding request received after a credit voucher application and a credit voucher activation are performed in a credit voucher subprogram; delivering, to the user terminal, a second payment channel list that includes the credit voucher and that is obtained through the channel binding; and performing order payment based on the credit voucher and a payment instruction that has the credit voucher and that is submitted by the user terminal.

It should be noted that, an implementation of the an computer-readable storage medium in the present specification and an implementation of the another credit voucher-based payment method in the present specification are based on the same invention concept. Therefore, for details of this implementation, references can be made to an implementation of the above corresponding method. Details are omitted for simplicity.

The implementations of the present specification are described in a progressive way. For same or similar parts of the implementations, mutual references can be made to the implementations. Each implementation focuses on a difference from the other implementations. For example, the apparatus implementations, the device implementations, and the computer-readable storage medium implementations are all similar to the method implementation. Therefore, descriptions are relatively simple. For reading of related content in the apparatus implementations, the device implementations, and the computer-readable storage medium implementations, references can be made to parts of the method implementation descriptions.

Particular implementations of the present specification are described above. Other implementations fall within the scope of the appended claims. In some situations, the actions or steps described in the claims can be performed in an order different from the order in the implementation and the desired results can still be achieved. In addition, the process depicted in the accompanying drawings does not necessarily require a particular execution order to achieve the desired results. In some implementations, multi-tasking and parallel processing can be advantageous.

In the 1930s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, such programming is mostly implemented by using "logic compiler" software. The logic compiler software is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented in any suitable manner, for example, the controller can use a form such as a microprocessor, a processor, or a computer-readable medium, a logic gate, a switch, an application specific integrated circuit (ASIC), a programmable logic controller, or an embedded microcontroller storing computer-readable program code (such as software or firmware) that can be executed by the (micro)processor. Examples of the controller include but are not limited to the following microcontrollers: ARC 625D, Atmel AT91SAM, Microchip PIC18F26K20, and Silicone Labs C8051F320. A storage controller can also be implemented as a part of control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Or the apparatus configured to implement various functions can even be considered as both a software module implementing the method and a structure in the hardware component.

Systems, apparatuses, modules, or units that are set forth in the previous implementations may be embodied by a computer chip or an entity or by a product with a specific function. A typical implementation device is a computer. For example, the computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the above apparatus is described by dividing functions into various units. Certainly, in response to that the implementations of the present specification are implemented, functions of the units can be implemented in one or more pieces of software and/or hardware.

A person skilled in the art should understand that one or more implementations of the present specification can be provided as methods, systems, or computer program products. Therefore, the one or more implementations of the present specification can use a form of hardware only implementations, software only implementations, or implementations with a combination of software and hardware. Moreover, the present specification can use a form of a computer program product that is implemented on one or more computer-readable storage media (including but not limited to a disk memory, a CD-ROM, an optical memory, etc.) that include computer-usable program code.

The present specification is described with reference to the flowcharts and/or block diagrams of the methods, the devices (systems), and the computer program products based on the implementations of the present specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

Alternatively or additionally, these computer program instructions can be stored in a computer-readable storage that can instruct a computer or another programmable data processing device to work in a specific manner, so the instructions stored in the computer-readable storage generate an artifact that includes an instruction apparatus. The instruction apparatus implements a specific function in one or more procedures in the flowcharts and/or in one or more blocks in the block diagrams.

Alternatively or additionally, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more central processing units (CPU), input/output interfaces, network interfaces, and memories.

The memory can include a non-persistent memory, a random access memory (RAM), a non-volatile memory, and/or another form that are in a computer-readable medium, for example, a read-only memory (ROM) or a flash memory (flash RAM). The memory is an example of the computer-readable medium.

The computer-readable medium includes permanent and non-permanent, removable and non-removable media, and can store information by using any method or technology. The information can be computer-readable instructions, a data structure, a program module, or other data. Examples of the computer-readable storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, magnetic disk storage, another magnetic storage device, or any other non-transmission medium. The computer-readable storage medium can be configured to store information that can be accessed by a computing device. As described in the present specification, the computer-readable medium does not include computer-readable transitory media such as a modulated data signal and a carrier.

It should be further noted that the terms "include", "comprise", or their any other variants are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes at least one ..." does not preclude the presence of additional identical elements in the process, method, product, or device that includes the element.

The one or more implementations of the present specification can be described in common contexts of computer-executable instructions executed by a computer, such as a program module. Generally, the program module includes a routine, a program, an object, a component, a data structure, etc. for executing a specific task or implementing a specific abstract data type. Alternatively, the one or more implementations of the present specification can be practiced in distributed computing environments. In the distributed computing environments, tasks are performed by remote processing devices connected through a communication network. In the distributed computing environments, the program module can be located in local and remote computer storage media including storage devices.

The above descriptions are merely implementations of the present specification and are not intended to limit the present specification. A person skilled in the art can make various changes and variations to the present specification. Any modification, equivalent replacement, improvement, etc. made without departing from the spirit and principle of the present specification shall fall within the scope of the claims in the present specification.

### EMBODIMENTS

Embodiment 1. A credit voucher-based payment method, comprising:
receiving and displaying a first payment channel list that is generated for order information and that is delivered by a server, the first payment channel list including an application identifier of a credit voucher application;
jumping to a credit voucher subprogram based on a payment request associated with the application identifier, to perform the credit voucher application and a credit voucher activation in the credit voucher subprogram, and perform payment channel binding on an activated credit voucher by using the server;
receiving and displaying a second payment channel list that includes the credit voucher and that is delivered by the server; and
submitting an obtained payment instruction with the credit voucher to the server, to perform order payment based on the credit voucher.

Embodiment 2. The credit voucher-based payment method according to embodiment 1, wherein the performing the credit voucher application includes:
obtaining, by the credit voucher subprogram, a key identity field entered through an application interface, and submitting the key identity field to a voucher server; and
determining, by the voucher server, voucher application data based on the key identity field, performing voucher application review, and delivering a review result to the credit voucher subprogram.

Embodiment 3. The credit voucher-based payment method according to embodiment 2, wherein the application interface includes a field collection control unit; and
wherein after the field collection control unit is triggered, an identity acquisition interface is invoked to obtain the key identity field from an application program and write the key identity field into the application interface, and the credit voucher subprogram runs in the application program.

Embodiment 4. The credit voucher-based payment method according to embodiment 2, wherein the performing the order payment based on the credit voucher includes:
obtaining a pay period quantity submitted on the application interface, and creating an installment payment order of the order information based on the pay period quantity, wherein
the pay period quantity is selected and determined from candidate pay period quantities of the credit voucher on the application interface, or is a recommended pay period quantity displayed on the application interface.

Embodiment 5. The credit voucher-based payment method according to embodiment 2, wherein the voucher server obtains voucher recommendation data on the application interface from the server by invoking a voucher recommendation interface; and wherein the determining the voucher recommendation data includes:
determining a page material type based on first user behavior data of an application program, and determining a page material and a dynamic display parameter of the page material type; and
using the page material and the dynamic display parameter as the voucher recommendation data.

Embodiment 6. The credit voucher-based payment method according to embodiment 3, wherein the credit voucher subprogram displays a payment waiting page after submitting the key identity field to the voucher server, and closes the payment waiting page after receiving the review result; or
the credit voucher subprogram returns a payment waiting duration to the application program after submitting the key identity field to the voucher server, and the application program displays the payment waiting page based on the payment waiting duration.

Embodiment 7. The credit voucher-based payment method according to embodiment 1, wherein the jumping to the credit voucher subprogram based on the payment request associated with the application identifier includes:
submitting, to the server, the payment request that includes the application identifier for the server to determine and return a subprogram link of a voucher institution corresponding to the application identifier; and
jumping to the credit voucher subprogram based on the returned subprogram link.

Embodiment 8. The credit voucher-based payment method according to embodiment 1, wherein the performing the credit voucher activation includes:
receiving and displaying, by the credit voucher subprogram, an activation interface that includes a review success result and that is delivered by a voucher server, and submitting, to the voucher server, identity verification information entered through the activation interface; and
after the voucher server successfully performs identity verification based on the identity verification information, activating the credit voucher, and after the activating the credit voucher succeeds, sending a voucher binding request to the server through interface invoking for the server to bind the activated credit voucher to a payment channel list in response to the voucher binding request, to obtain the second payment channel list.

Embodiment 9. The credit voucher-based payment method according to embodiment 8, wherein the activation interface includes a payment control unit, and in response to that the payment control unit is triggered, an application program is returned from the credit voucher subprogram, and order payment is performed based on a target payment channel selected from a payment channel list displayed by the application program.

Embodiment 10. The credit voucher-based payment method according to embodiment 1, further comprising: before the step of receiving and displaying the first payment channel list that is generated for order information and that is delivered by the server is performed:
detecting whether a payment user corresponding to the order information exists in a predetermined user group, wherein the predetermined user group includes a voucher user who has applied for obtaining a credit voucher from a voucher institution to which the credit voucher subprogram belongs; and
in response to that the payment user corresponding to the order information exists in the predetermined user group, performing the step of receiving and displaying the first payment channel list that is generated for order information and that is delivered by the server.

Embodiment 11. The credit voucher-based payment method according to embodiment 1, wherein the determining the application identifier includes:
determining a user recommendation preference based on second user behavior data of an application program;
in response to that the user recommendation preference is a first recommendation preference, adding, to the application identifier, voucher benefit information of performing the credit voucher application, wherein the voucher benefit information is determined by entering the second user behavior data into a benefit pricing algorithm to perform benefit pricing calculation; and
in response to that the user recommendation preference is a second recommendation preference, adding, to the application identifier, voucher limit information of performing the credit voucher application.

Embodiment 12. The credit voucher-based payment method according to embodiment 1, wherein the server returns a binding success prompt to the voucher server after the performing the payment channel binding, and the voucher server delivers a return instruction to the credit voucher subprogram based on the binding success prompt; and
the credit voucher subprogram jumps to a payment interface of the second payment channel list based on the delivered return instruction.

Embodiment 13. The credit voucher-based payment method according to embodiment 1, further comprising:
after the step of receiving and displaying the second payment channel list that includes the credit voucher and that is delivered by the server is performed, and before the step of submitting the obtained payment instruction with the credit voucher to the server is performed,
in response to that it is detected that the credit voucher in the second payment channel list is selected, obtaining and displaying one or more of voucher benefit information or voucher limit information of the credit voucher from the server.

Embodiment 14. The credit voucher-based payment method according to embodiment 1, further comprising determining a ranking of the application identifier in the first payment channel list, the determining the ranking including:
determining a user payment preference based on third user behavior data of an application program, and determining the ranking of the application identifier in the first payment channel list based on the user payment preference; or
determining the ranking of the application identifier in the first payment channel list based on a recommendation policy of the application program.

Embodiment 15. A credit voucher-based payment method, comprising:
generating a first payment channel list based on order information of a payment user, and delivering the first payment channel list to a user terminal, the first payment channel list including an application identifier of a credit voucher application;
performing payment channel binding on an activated credit voucher based on a voucher binding request received after a credit voucher application and a credit voucher activation are performed in a credit voucher subprogram;
delivering, to the user terminal, a second payment channel list that includes the credit voucher and that is obtained through the channel binding; and
performing order payment based on the credit voucher and a payment instruction that has the credit voucher and that is submitted by the user terminal.

Embodiment 16. The credit voucher-based payment method according to embodiment 15, wherein the credit voucher application being performed includes:
obtaining, by the credit voucher subprogram, a key identity field entered through an application interface, and submitting the key identity field to a voucher server; and
determining, by the voucher server, voucher application data based on the key identity field, performing voucher application review, and delivering a review result to the credit voucher subprogram.

Embodiment 17. The credit voucher-based payment method according to embodiment 16, wherein the performing the order payment based on the credit voucher includes:
obtaining a pay period quantity submitted on an application interface, and creating an installment payment order of the order information based on the pay period quantity,
wherein the pay period quantity is selected and determined from candidate pay period quantities of the credit voucher on the application interface, or is a recommended pay period quantity displayed on the application interface.

Embodiment 18. The credit voucher-based payment method according to embodiment 15, wherein the credit voucher activation being performed includes:
receiving and displaying, by the credit voucher subprogram, an activation interface that includes a review success result and that is delivered by a voucher server, and submitting, to the voucher server, identity verification information entered through the activation interface; and
after the voucher server successfully performs identity verification based on the identity verification information, activating the credit voucher, and after the activating the credit voucher succeeds, sending the voucher binding request through interface invoking.

Embodiment 19. A credit voucher-based payment apparatus, comprising:
a first receiving module, configured to receive and display a first payment channel list that is generated for order information and that is delivered by a server, the first payment channel list including an application identifier of a credit voucher application;
a jump module, configured to jump to a credit voucher subprogram based on a payment request associated with the application identifier, to perform the credit voucher application and a credit voucher activation in the credit voucher subprogram, and perform payment channel binding on an activated credit voucher by using the server;
a second receiving module, configured to receive and display a second payment channel list that includes the credit voucher and that is delivered by the server; and
an instruction submission module, configured to submit an obtained payment instruction with the credit voucher to the server, to perform order payment based on the credit voucher.

Embodiment 20. A credit voucher-based payment apparatus, comprising:
a first delivery module, configured to: generate a first payment channel list based on order information of a payment user, and deliver the first payment channel list to a user terminal, the first payment channel list including an application identifier of a credit voucher application;
a binding module, configured to perform payment channel binding on an activated credit voucher based on a voucher binding request received after a credit voucher application and a credit voucher activation are performed in a credit voucher subprogram;
a second delivery module, configured to deliver, to the user terminal, a second payment channel list that includes the credit voucher and that is obtained through the channel binding; and
an order payment module, configured to perform order payment based on the credit voucher and a payment instruction that has the credit voucher and that is submitted by the user terminal.

Embodiment 21. A credit voucher-based payment device, comprising: a processor, and a memory configured to store computer-executable instructions, in response to that the computer-executable instructions are executed, the processor being enabled to perform the following operations:
receiving and displaying a first payment channel list that is generated for order information and that is delivered by a server, the first payment channel list including an application identifier of a credit voucher application;
jumping to a credit voucher subprogram based on a payment request associated with the application identifier, to perform the credit voucher application and a credit voucher activation in the credit voucher subprogram, and perform payment channel binding on an activated credit voucher by using the server;
receiving and displaying a second payment channel list that includes the credit voucher and that is delivered by the server; and
submitting an obtained payment instruction with the credit voucher to the server, to perform order payment based on the credit voucher.

Embodiment 22. A credit voucher-based payment device, comprising: a processor, and a memory configured to store computer-executable instructions, in response to that the computer-executable instructions are executed, the processor being enabled to perform the following operations:
generating a first payment channel list based on order information of a payment user, and delivering the first payment channel list to a user terminal, the first payment channel list including an application identifier of a credit voucher application;
performing payment channel binding on an activated credit voucher based on a voucher binding request received after a credit voucher application and a credit voucher activation are performed in a credit voucher subprogram;
delivering, to the user terminal, a second payment channel list that includes the credit voucher and that is obtained through the channel binding; and
performing order payment based on the credit voucher and a payment instruction that has the credit voucher and that is submitted by the user terminal.

Embodiment 23. A computer-readable storage medium, configured to store computer-executable instructions, in response to that the computer-executable instructions are executed, the steps of the method according to embodiment 1 being implemented.

Embodiment 24. A computer-readable storage medium, configured to store computer-executable instructions, in response to that the computer-executable instructions are executed, the steps of the method according to embodiment 15 being implemented.

## Claims

1. A credit voucher-based payment method, comprising:
receiving and displaying a first payment channel list that is generated for order
information and that is delivered by a server, the first payment channel list including an application identifier of a credit voucher application;
jumping to a credit voucher subprogram based on a payment request associated with the application identifier, to perform the credit voucher application and a credit voucher activation in the credit voucher subprogram, and perform payment channel binding on an activated credit voucher by using the server;
receiving and displaying a second payment channel list that includes the credit voucher and that is delivered by the server; and
submitting an obtained payment instruction with the credit voucher to the server, to perform order payment based on the credit voucher.

2. The credit voucher-based payment method according to claim 1, wherein the performing the credit voucher application includes:
obtaining, by the credit voucher subprogram, a key identity field entered through an application interface, and submitting the key identity field to a voucher server; and
determining, by the voucher server, voucher application data based on the key identity field, performing voucher application review, and delivering a review result to the credit voucher subprogram.

3. The credit voucher-based payment method according to claim 2, wherein the application interface includes a field collection control unit; and
wherein after the field collection control unit is triggered, an identity acquisition interface is invoked to obtain the key identity field from an application program and write the key identity field into the application interface, and the credit voucher subprogram runs in the application program.

4. The credit voucher-based payment method according to claim 2, wherein the performing the order payment based on the credit voucher includes:
obtaining a pay period quantity submitted on the application interface, and creating an installment payment order of the order information based on the pay period quantity,
wherein
the pay period quantity is selected and determined from candidate pay period quantities of the credit voucher on the application interface, or is a recommended pay period quantity displayed on the application interface.

5. The credit voucher-based payment method according to claim 2, wherein the voucher server obtains voucher recommendation data on the application interface from the server by invoking a voucher recommendation interface; and
wherein the determining the voucher recommendation data includes:
determining a page material type based on first user behavior data of an application program, and determining a page material and a dynamic display parameter of the page material type; and
using the page material and the dynamic display parameter as the voucher recommendation data.

6. The credit voucher-based payment method according to claim 3, wherein the credit voucher subprogram displays a payment waiting page after submitting the key identity field to the voucher server, and closes the payment waiting page after receiving the review result; or
the credit voucher subprogram returns a payment waiting duration to the application program after submitting the key identity field to the voucher server, and the application program displays the payment waiting page based on the payment waiting duration.

7. The credit voucher-based payment method according to claim 1, wherein the jumping to the credit voucher subprogram based on the payment request associated with the application identifier includes:
submitting, to the server, the payment request that includes the application identifier for the server to determine and return a subprogram link of a voucher institution corresponding to the application identifier; and
jumping to the credit voucher subprogram based on the returned subprogram link.

8. The credit voucher-based payment method according to claim 1, wherein the performing the credit voucher activation includes:
receiving and displaying, by the credit voucher subprogram, an activation interface that includes a review success result and that is delivered by a voucher server, and
submitting, to the voucher server, identity verification information entered through the activation interface; and
after the voucher server successfully performs identity verification based on the identity verification information, activating the credit voucher, and after the activating the credit voucher succeeds, sending a voucher binding request to the server through interface invoking for the server to bind the activated credit voucher to a payment channel list in response to the voucher binding request, to obtain the second payment channel list,
wherein the activation interface includes a payment control unit, and in response to that the payment control unit is triggered, an application program is returned from the credit voucher subprogram, and order payment is performed based on a target payment channel selected from a payment channel list displayed by the application program.

9. The credit voucher-based payment method according to claim 1, further comprising:
before the step of receiving and displaying the first payment channel list that is generated for order information and that is delivered by the server is performed:
detecting whether a payment user corresponding to the order information exists in a predetermined user group, wherein the predetermined user group includes a voucher user who has applied for obtaining a credit voucher from a voucher institution to which the credit voucher subprogram belongs; and
in response to that the payment user corresponding to the order information exists in the predetermined user group, performing the step of receiving and displaying the first payment channel list that is generated for order information and that is delivered by the server, and/or
wherein the determining the application identifier includes:
determining a user recommendation preference based on second user behavior data of an application program;
in response to that the user recommendation preference is a first recommendation preference, adding, to the application identifier, voucher benefit information of performing the credit voucher application, wherein the voucher benefit information is determined by entering the second user behavior data into a benefit pricing algorithm to perform benefit pricing calculation; and
in response to that the user recommendation preference is a second recommendation preference, adding, to the application identifier, voucher limit information of performing the credit voucher application.

10. The credit voucher-based payment method according to claim 1, wherein the server returns a binding success prompt to the voucher server after the performing the payment channel binding, and the voucher server delivers a return instruction to the credit voucher subprogram based on the binding success prompt; and
the credit voucher subprogram jumps to a payment interface of the second payment channel list based on the delivered return instruction.

11. The credit voucher-based payment method according to claim 1, further comprising:
after the step of receiving and displaying the second payment channel list that includes the credit voucher and that is delivered by the server is performed, and before the step of submitting the obtained payment instruction with the credit voucher to the server is performed,
in response to that it is detected that the credit voucher in the second payment channel list is selected, obtaining and displaying one or more of voucher benefit information or voucher limit information of the credit voucher from the server,
the method further comprising determining a ranking of the application identifier in the first payment channel list, the determining the ranking including:
determining a user payment preference based on third user behavior data of an application program, and determining the ranking of the application identifier in the first payment channel list based on the user payment preference; or
determining the ranking of the application identifier in the first payment channel list based on a recommendation policy of the application program.

12. A credit voucher-based payment method, comprising:
generating a first payment channel list based on order information of a payment user,
and delivering the first payment channel list to a user terminal, the first payment channel list including an application identifier of a credit voucher application;
performing payment channel binding on an activated credit voucher based on a voucher binding request received after a credit voucher application and a credit voucher activation are performed in a credit voucher subprogram;
delivering, to the user terminal, a second payment channel list that includes the credit voucher and that is obtained through the channel binding; and
performing order payment based on the credit voucher and a payment instruction that has the credit voucher and that is submitted by the user terminal.

13. The credit voucher-based payment method according to claim 12, wherein the credit voucher application being performed includes:
obtaining, by the credit voucher subprogram, a key identity field entered through an application interface, and submitting the key identity field to a voucher server; and
determining, by the voucher server, voucher application data based on the key identity field, performing voucher application review, and delivering a review result to the credit voucher subprogram;
wherein the performing the order payment based on the credit voucher includes:
obtaining a pay period quantity submitted on an application interface, and creating an installment payment order of the order information based on the pay period quantity,
wherein the pay period quantity is selected and determined from candidate pay period quantities of the credit voucher on the application interface, or is a recommended pay period quantity displayed on the application interface; and/or wherein the credit voucher activation being performed includes:
receiving and displaying, by the credit voucher subprogram, an activation interface that includes a review success result and that is delivered by a voucher server, and
submitting, to the voucher server, identity verification information entered through the activation interface; and
after the voucher server successfully performs identity verification based on the identity verification information, activating the credit voucher, and after the activating the credit voucher succeeds, sending the voucher binding request through interface invoking.

14. A credit voucher-based payment device, comprising:
a processor, and a memory configured to store computer-executable instructions, in response to that the computer-executable instructions are executed, the processor being enabled to perform a method according to any one of the preceding claims.

15. A computer-readable storage medium, configured to store computer-executable instructions, in response to that the computer-executable instructions are executed, the steps of the method according to any one of the claims 1 to 13 being implemented.
